# EUROPEAN PATENT SPECIFICATION

(11) **EP 3 531 665 B1**
(45) Date of publication and mention of the grant of the patent: **19.01.2022**
(21) Application number: 17862482.1
(22) Date of filing: 15.09.2017
(51) Int. Cl.: H04L 29/08, H04L 1/00, H04L 1/16, H04L 1/18, H04L 5/00, H04L 27/26, H04W 28/06, H04W 80/02, H04W 84/12

(54) **COMMUNICATION DEVICE AND COMMUNICATION METHOD THAT USE AGGREGATE PHYSICAL LAYER CONVERGENCE PROTOCOL DATA UNIT**
KOMMUNIKATIONSVORRICHTUNG UND KOMMUNIKATIONSVERFAHREN UNTER VERWENDUNG EINER KONVERGENZPROTOKOLLDATENEINHEIT EINER AGGREGIERTEN PHYSIKALISCHEN SCHICHT
DISPOSITIF DE COMMUNICATION ET PROCÉDÉ DE COMMUNICATION UTILISANT UNE UNITÉ DE DONNÉES DE PROTOCOLE DE CONVERGENCE DE COUCHE PHYSIQUE AGRÉGÉE

(30) Priority: 21.10.2016 JP 2016207310
(43) Date of publication of application: 28.08.2019
(73) Proprietor: Panasonic Intellectual Property Corporation of America, Torrance, CA 90504 (US)
(72) Inventor: SAKAMOTO Takenori, Osaka-shi, Osaka 540-6207 (JP); IRIE Masataka, Osaka-shi, Osaka 540-6207 (JP); MOTOZUKA Hiroyuki, Osaka-shi, Osaka 540-6207 (JP)
(74) Representative: Grünecker Patent- und Rechtsanwälte PartG mbB
(86) International application number: PCT/JP2017/033393
(87) International publication number: WO 2018/074119

(56) References cited:
- EP-A1- 3 306 883
- EP-A1- 3 425 956
- WO-A1-2016/129201
- JP-A- 2014 161 031
- JP-A- 2015 111 829
- US-A1- 2015 319 782
- US-A1- 2016 309 457

## Description

### Technical Field

The present disclosure relates to wireless communication, and more specifically, relates to an apparatus and a method of configuring an aggregate PPDU (physical layer convergence protocol (PLCP) protocol data unit) to communicate in a wireless communication system.

### Background Art

Interest in millimeter-wave networks using the license-free 60 GHz band is deepening. Wireless Hi-Definition (HD) technology is the industry's first wireless communication standard that uses the 60 GHz band, enabling wireless streaming of high-definition audio, video, and data at several gigabits per second between consumer electronic devices, personal computers, and mobile devices.

Another wireless communication technology that performs processing in the 60 GHz band is the WiGig technology, which is being standardized by the Institute of Electrical and Electronic Engineers (IEEE) as the IEEE 802.11ad standard.

WiGig technology is able to use a standard bandwidth of 2.16 GHz to thereby provide a physical-layer data transmission speed up to a maximum of 6.7 Gbps. WiGig technology supports both single-carrier (SC) modulation and orthogonal frequency-division multiplexing (OFDM) modulation.

Also, to improve the transmission efficiency, WiGig technology supports an aggregate physical layer convergence protocol data unit (Aggregate-PPDU; hereinafter designated "A-PPDU") (see NPL 1). A-PPDU is a technology that transmits without providing inter-frame spacing (IFS) or a preamble between two or more PPDUs. Note that in the case in which the A-PPDU is used in WiGig technology, an aggregate MAC protocol data unit (Aggregate-MPDU; A-MPDU) is used in each PPDU forming the A-PPDU.

At this point, the IEEE 802.11ay task group is aiming to achieve up to double-digit Gbps physical-layer data transmission speeds by combining MIMO technology as next-generation enhanced directional multi-gigabit (EDMG) WiGig technology with channel bonding technology, while also maintaining backwards compatibility with the existing (that is, legacy) WiGig technology (see NPL 2).

### Citation List

### Patent Literature

US 2016/309457 A1 relates to the WiGig (IEEE 802.11ad) and to NG60 (IEEE 802.11ay) framework. A frame for carrying data also includes preamble(s), a legacy header and a non-legacy header.

WO 2016/129201 A1 (based on English-language version EP 3 522 407 A1) relates to the WiGig (IEEE 802.11ad) and to NG60 (IEEE 802.11ay) framework and in particular to transmission in wide bandwidth. The channel bandwidth information can only be interpreted correctly by the non-legacy stations. Thus, legacy preambles are transmitted in the standard bandwidth.

EP 3 306 883 A1 relates to the WiGig (IEEE 802.11ad) and to NG60 (IEEE 802.11ay) framework. The additional PPDU field in the legacy header 1016 shall be set to 0, and the aggregate MF SC PPDU 1000 shall be envisioned by the legacy STA as a normal legacy PPDU 100 instead of legacy aggregate SC PPDU 400. A total packet length of the NG60 STF 1007, the NG60 CEFs 1009, all of the NG60 headers and all of the data fields is set as the Length field in the legacy header 1005.

EP 3 425 956 A1 relates to IEEE 802.11ad and IEEE 802.11ay and mentions support of A-PPDUs.

US 2015/319782 A1 discloses an access point including a generation module, a transceiver, and an acknowledgment module. The generation module is configured to generate a synchronization signal. The transceiver is configured to (i) transmit the synchronization signal to a station, (ii) receive a medium access control protocol data unit based on the synchronization signal during a transmit opportunity period for the station. The acknowledgment module is configured to generate an acknowledgment signal based on the reception of the medium access control protocol data unit. The synchronization signal or the acknowledgment signal includes a null data packet frame. The null data packet frame includes a legacy signal field. The legacy signal field comprises a length of a portion of the null data packet frame subsequent to the legacy signal field. The transceiver is configured to transmit the acknowledgment signal to the station.

### Non-Patent Literature

NPL 1: IEEE 802.11ad-2012 P237 9.13a DMG A-PPDU operation
NPL 2: 11-15-1358-05-00ay Spec Framework

### Summary of Invention

### Technical Problem

To improve the transmission efficiency in IEEE 802.11ay, it is necessary to support technology (hereinafter designated "EDMG A-PPDU") that transmits without providing IFS or a preamble between two or more EDMG PPDUs, but in communication using EDMG A-PPDU, there are no considerations regarding how to define an access control method capable of maintaining backwards compatibility with legacy WiGig devices.

### Solution to Problem

The problem is solved by the features of the independent claims.

It should be noted that general or specific embodiments may be implemented as a system, a method, an integrated circuit, a computer program, a storage medium, or any selective combination thereof.

### Advantageous Effects of Invention

In the case of using the access control method of the present disclosure, an EDMG A-PPDU capable of maintaining backwards compatibility with legacy WiGig technology may be provided.

Additional benefits and advantages according to an aspect of the present disclosure will become apparent from the specification and the drawings. These benefits and/or advantages may be obtained individually by the various embodiments and features of the specification and drawings, which need not all be provided in order to obtain one or more of such benefits and/or advantages.

### Brief Description of Drawings

[Fig. 1] Fig. 1 is a diagram illustrating one example of a process of a transmission source EDMG wireless station and a destination EDMG wireless station when receiving correctly in communication using EDMG PPDU presupposed by the present disclosure.
[Fig. 2] Fig. 2 is a diagram illustrating one example of a process of a transmission source EDMG wireless station and a destination EDMG wireless station when an FCS error occurs in communication using EDMG PPDU presupposed by the present disclosure.
[Fig. 3] Fig. 3 is a diagram illustrating one example of a process of a transmission source EDMG wireless station and a destination EDMG wireless station when an HCS error occurs in the EDMG-Header-A in communication using EDMG PPDU presupposed by the present disclosure.
[Fig. 4] Fig. 4 is a diagram illustrating one example of a process of a transmission source EDMG wireless station and a non-destination EDMG wireless station when receiving correctly in communication using EDMG PPDU presupposed by the present disclosure.
[Fig. 5] Fig. 5 is a diagram illustrating one example of a process of a transmission source EDMG wireless station and a non-destination EDMG wireless station when an FCS error occurs in communication using EDMG PPDU presupposed by the present disclosure.
[Fig. 6] Fig. 6 is a diagram illustrating one example of a process of a transmission source EDMG wireless station and a non-destination EDMG wireless station when an HCS error occurs in the EDMG-Header-A in communication using EDMG PPDU presupposed by the present disclosure.
[Fig. 7] Fig. 7 is a diagram illustrating one example of a process of a transmission source EDMG wireless station and a Legacy EDMG wireless station in communication using EDMG PPDU presupposed by the present disclosure.
[Fig. 8] Fig. 8 is a diagram illustrating one example of a process of a transmission source EDMG wireless station and a destination EDMG wireless station when receiving correctly according to Embodiment 1.
[Fig. 9] Fig. 9 is a diagram illustrating one example of a process of a transmission source EDMG wireless station and a destination EDMG wireless station when an FCS error occurs in all data fields in communication using EDMG A-PPDU according to Embodiment 1.
[Fig. 10] Fig. 10 is a diagram illustrating one example of a process of a transmission source EDMG wireless station and a destination EDMG wireless station when an HCS error occurs in the EDMG-Header-A in communication using EDMG A-PPDU according to Embodiment 1.
[Fig. 11] Fig. 11 is a diagram illustrating one example of a process of a transmission source EDMG wireless station and a non-destination EDMG wireless station when receiving correctly in communication using EDMG A-PPDU according to Embodiment 1.
[Fig. 12] Fig. 12 is a diagram illustrating one example of a process of a transmission source EDMG wireless station and a non-destination EDMG wireless station when an FCS error occurs in all data fields in communication using EDMG A-PPDU according to Embodiment 1.
[Fig. 13] Fig. 13 is a diagram illustrating one example of a process of a transmission source EDMG wireless station and a non-destination EDMG wireless station when an HCS error occurs in the EDMG-Header-A in communication using EDMG A-PPDU according to Embodiment 1.
[Fig. 14] Fig. 14 is a diagram illustrating one example of a process of a transmission source EDMG wireless station and an EDMG wireless station not supporting EDMG A-PPDU when receiving correctly according to Embodiment 1.
[Fig. 15] Fig. 15 is a diagram illustrating one example of a process of a transmission source EDMG wireless station and an EDMG wireless station not supporting EDMG A-PPDU when an FCS error occurs in communication using EDMG PPDU according to Embodiment 1.
[Fig. 16] Fig. 16 is a diagram illustrating one example of a process of a transmission source EDMG wireless station and an EDMG wireless station not supporting EDMG A-PPDU when an HCS error occurs in the EDMG-Header-A in communication using EDMG A-PPDU according to Embodiment 1.
[Fig. 17] Fig. 17 is a diagram illustrating one example of a process of a transmission source EDMG wireless station and a Legacy EDMG wireless station in communication using EDMG A-PPDU according to Embodiment 1.
[Fig. 18] Fig. 18 is a diagram illustrating one example of a process of a transmission source EDMG wireless station and a destination EDMG wireless station when receiving correctly according to Embodiment 2.
[Fig. 19] Fig. 19 is a diagram illustrating one example of a process of a transmission source EDMG wireless station and a destination EDMG wireless station when an FCS error occurs in all data fields in communication using EDMG A-PPDU according to Embodiment 2.
[Fig. 20] Fig. 20 is a diagram illustrating one example of a process of a transmission source EDMG wireless station and a destination EDMG wireless station when an HCS error occurs in the EDMG-Header-A in communication using EDMG A-PPDU according to Embodiment 2.
[Fig. 21] Fig. 21 is a diagram illustrating one example of a process of a transmission source EDMG wireless station and a non-destination EDMG wireless station when receiving correctly in communication using EDMG A-PPDU according to Embodiment 2.
[Fig. 22] Fig. 22 is a diagram illustrating one example of a process of a transmission source EDMG wireless station and a non-destination EDMG wireless station when an FCS error occurs in all data fields in communication using EDMG A-PPDU according to Embodiment 2.
[Fig. 23] Fig. 23 is a diagram illustrating one example of a process of a transmission source EDMG wireless station and a non-destination EDMG wireless station when an HCS error occurs in the EDMG-Header-A in communication using EDMG A-PPDU according to Embodiment 2.
[Fig. 24] Fig. 24 is a diagram illustrating one example of a process of a transmission source EDMG wireless station and an EDMG wireless station not supporting EDMG A-PPDU when receiving correctly according to Embodiment 2.
[Fig. 25] Fig. 25 is a diagram illustrating one example of a process of a transmission source EDMG wireless station and an EDMG wireless station not supporting EDMG A-PPDU when an FCS error occurs in communication using EDMG A-PPDU according to Embodiment 2.
[Fig. 26] Fig. 26 is a diagram illustrating one example of a process of a transmission source EDMG wireless station and an EDMG wireless station not supporting EDMG A-PPDU when an HCS error occurs in the EDMG-Header-A in communication using EDMG A-PPDU according to Embodiment 2.
[Fig. 27] Fig. 27 is a diagram illustrating one example of a process of a transmission source EDMG wireless station and a Legacy EDMG wireless station in communication using EDMG A-PPDU according to Embodiment 2.
[Fig. 28] Fig. 28 is a diagram illustrating one example of a process of a transmission source EDMG wireless station and a destination EDMG wireless station when receiving correctly according to Embodiment 3.
[Fig. 29] Fig. 29 is a diagram illustrating one example of a process of a transmission source EDMG wireless station and a destination EDMG wireless station when an FCS error occurs in all data fields in communication using EDMG A-PPDU according to Embodiment 3.
[Fig. 30] Fig. 30 is a diagram illustrating one example of a process of a transmission source EDMG wireless station and a destination EDMG wireless station when an HCS error occurs in the EDMG-Header-A in communication using EDMG A-PPDU according to Embodiment 3.
[Fig. 31] Fig. 31 is a diagram illustrating one example of a process of a transmission source EDMG wireless station and a non-destination EDMG wireless station when receiving correctly in communication using EDMG A-PPDU according to Embodiment 3.
[Fig. 32] Fig. 32 is a diagram illustrating one example of a process of a transmission source EDMG wireless station and a non-destination EDMG wireless station when an FCS error occurs in all data fields in communication using EDMG A-PPDU according to Embodiment 3.
[Fig. 33] Fig. 33 is a diagram illustrating one example of a process of a transmission source EDMG wireless station and a non-destination EDMG wireless station when an HCS error occurs in the EDMG-Header-A in communication using EDMG A-PPDU according to Embodiment 3.
[Fig. 34] Fig. 34 is a diagram illustrating one example of a process of a transmission source EDMG wireless station and an EDMG wireless station not supporting EDMG A-PPDU when receiving correctly according to Embodiment 3.
[Fig. 35] Fig. 35 is a diagram illustrating one example of a process of a transmission source EDMG wireless station and an EDMG wireless station not supporting EDMG A-PPDU when an FCS error occurs in communication using EDMG A-PPDU according to Embodiment 3.
[Fig. 36] Fig. 36 is a diagram illustrating one example of a process of a transmission source EDMG wireless station and an EDMG wireless station not supporting EDMG A-PPDU when an HCS error occurs in the EDMG-Header-A in communication using EDMG PPDU according to Embodiment 3.
[Fig. 37] Fig. 37 is a diagram illustrating one example of a process of a transmission source EDMG wireless station and a Legacy EDMG wireless station in communication using EDMG A-PPDU according to Embodiment 3.
[Fig. 38] Fig. 38 is a diagram illustrating one example of a process of a transmission source EDMG wireless station and a destination EDMG wireless station when receiving correctly according to Embodiment 4.
[Fig. 39] Fig. 39 is a diagram illustrating one example of a process of a transmission source EDMG wireless station and a destination EDMG wireless station when an FCS error occurs in all data fields in communication using EDMG A-PPDU according to Embodiment 4.
[Fig. 40] Fig. 40 is a diagram illustrating one example of a process of a transmission source EDMG wireless station and a destination EDMG wireless station when an HCS error occurs in the EDMG-Header-A in communication using EDMG A-PPDU according to Embodiment 4.
[Fig. 41] Fig. 41 is a diagram illustrating one example of a process of a transmission source EDMG wireless station and a non-destination EDMG wireless station when receiving correctly in communication using EDMG A-PPDU according to Embodiment 4.
[Fig. 42] Fig. 42 is a diagram illustrating one example of a process of a transmission source EDMG wireless station and a non-destination EDMG wireless station when an FCS error occurs in all data fields in communication using EDMG A-PPDU according to Embodiment 4.
[Fig. 43] Fig. 43 is a diagram illustrating one example of a process of a transmission source EDMG wireless station and a non-destination EDMG wireless station when an HCS error occurs in the EDMG-Header-A in communication using EDMG A-PPDU according to Embodiment 4.
[Fig. 44] Fig. 44 is a diagram illustrating one example of a process of a transmission source EDMG wireless station and an EDMG wireless station not supporting EDMG A-PPDU when receiving correctly according to Embodiment 4.
[Fig. 45] Fig. 45 is a diagram illustrating one example of a process of a transmission source EDMG wireless station and an EDMG wireless station not supporting EDMG A-PPDU when an FCS error occurs in communication using EDMG A-PPDU according to Embodiment 4.
[Fig. 46] Fig. 46 is a diagram illustrating one example of a process of a transmission source EDMG wireless station and an EDMG wireless station not supporting EDMG A-PPDU when an HCS error occurs in the EDMG-Header-A in communication using EDMG A-PPDU according to Embodiment 4.
[Fig. 47] Fig. 47 is a diagram illustrating one example of a process of a transmission source EDMG wireless station and a Legacy EDMG wireless station in communication using EDMG A-PPDU according to Embodiment 4.
[Fig. 48] Fig. 48 is a diagram illustrating one example of a process of a transmission source EDMG wireless station and a destination EDMG wireless station when receiving correctly according to Embodiment 5.
[Fig. 49] Fig. 49 is a diagram illustrating one example of a process of a transmission source EDMG wireless station and a destination EDMG wireless station when an FCS error occurs in all data fields in communication using EDMG A-PPDU according to Embodiment 5.
[Fig. 50] Fig. 50 is a diagram illustrating one example of a process of a transmission source EDMG wireless station and a destination EDMG wireless station when an HCS error occurs in the EDMG-Header-A in communication using EDMG A-PPDU according to Embodiment 5.
[Fig. 51] Fig. 51 is a diagram illustrating one example of a process of a transmission source EDMG wireless station and a non-destination EDMG wireless station when receiving correctly in communication using EDMG A-PPDU according to Embodiment 5.
[Fig. 52] Fig. 52 is a diagram illustrating one example of a process of a transmission source EDMG wireless station and a non-destination EDMG wireless station when an FCS error occurs in all data fields in communication using EDMG A-PPDU according to Embodiment 5.
[Fig. 53] Fig. 53 is a diagram illustrating one example of a process of a transmission source EDMG wireless station and a non-destination EDMG wireless station when an HCS error occurs in the EDMG-Header-A in communication using EDMG A-PPDU according to Embodiment 5.
[Fig. 54] Fig. 54 is a diagram illustrating one example of a process of a transmission source EDMG wireless station and an EDMG wireless station not supporting EDMG A-PPDU when receiving correctly according to Embodiment 5.
[Fig. 55] Fig. 55 is a diagram illustrating one example of a process of a transmission source EDMG wireless station and an EDMG wireless station not supporting EDMG A-PPDU when an FCS error occurs in communication using EDMG A-PPDU according to Embodiment 5.
[Fig. 56] Fig. 56 is a diagram illustrating one example of a process of a transmission source EDMG wireless station and an EDMG wireless station not supporting EDMG A-PPDU when an HCS error occurs in the EDMG-Header-A in communication using EDMG A-PPDU according to Embodiment 5.
[Fig. 57] Fig. 57 is a diagram illustrating one example of a process of a transmission source EDMG wireless station and a Legacy EDMG wireless station in communication using EDMG PPDU according to Embodiment 5.
[Fig. 58] Fig. 58 is a diagram illustrating one example of a process of a transmission source EDMG wireless station and a destination EDMG wireless station when receiving correctly according to Embodiment 6.
[Fig. 59] Fig. 59 is a diagram illustrating one example of a process of a transmission source EDMG wireless station and a destination EDMG wireless station when an FCS error occurs in all data fields in communication using EDMG A-PPDU according to Embodiment 6.
[Fig. 60] Fig. 60 is a diagram illustrating one example of a process of a transmission source EDMG wireless station and a destination EDMG wireless station when an HCS error occurs in the EDMG-Header-A in communication using EDMG A-PPDU according to Embodiment 6.
[Fig. 61] Fig. 61 is a diagram illustrating one example of a process of a transmission source EDMG wireless station and a non-destination EDMG wireless station when receiving correctly in communication using EDMG A-PPDU according to Embodiment 6.
[Fig. 62] Fig. 62 is a diagram illustrating one example of a process of a transmission source EDMG wireless station and a non-destination EDMG wireless station when an FCS error occurs in all data fields in communication using EDMG A-PPDU according to Embodiment 6.
[Fig. 63] Fig. 63 is a diagram illustrating one example of a process of a transmission source EDMG wireless station and a non-destination EDMG wireless station when an HCS error occurs in the EDMG-Header-A in communication using EDMG PPDU according to Embodiment 6.
[Fig. 64] Fig. 64 is a diagram illustrating one example of a process of a transmission source EDMG wireless station and an EDMG wireless station not supporting EDMG A-PPDU when receiving correctly according to Embodiment 6.
[Fig. 65] Fig. 65 is a diagram illustrating one example of a process of a transmission source EDMG wireless station and an EDMG wireless station not supporting EDMG A-PPDU when an FCS error occurs in communication using EDMG A-PPDU according to Embodiment 6.
[Fig. 66] Fig. 66 is a diagram illustrating one example of a process of a transmission source EDMG wireless station and an EDMG wireless station not supporting EDMG A-PPDU when an HCS error occurs in the EDMG-Header-A in communication using EDMG A-PPDU according to Embodiment 6.
[Fig. 67] Fig. 67 is a diagram illustrating one example of a process of a transmission source EDMG wireless station and a Legacy EDMG wireless station in communication using EDMG A-PPDU according to Embodiment 6.
[Fig. 68] Fig. 68 is a diagram illustrating one example of a configuration of an EDMG wireless station according to the present disclosure.
[Fig. 69] Fig. 69 is a diagram illustrating one example of a configuration of an EDMG PPDU generation unit of an EDMG wireless station according to the present disclosure.

### Description of Embodiments

Hereinafter, various embodiments of the present disclosure will be described in detail and with reference to the attached drawings. In the following description, for the sake of clarity and brevity, a detailed description of publicly available functions and configurations incorporated into this specification will be omitted.

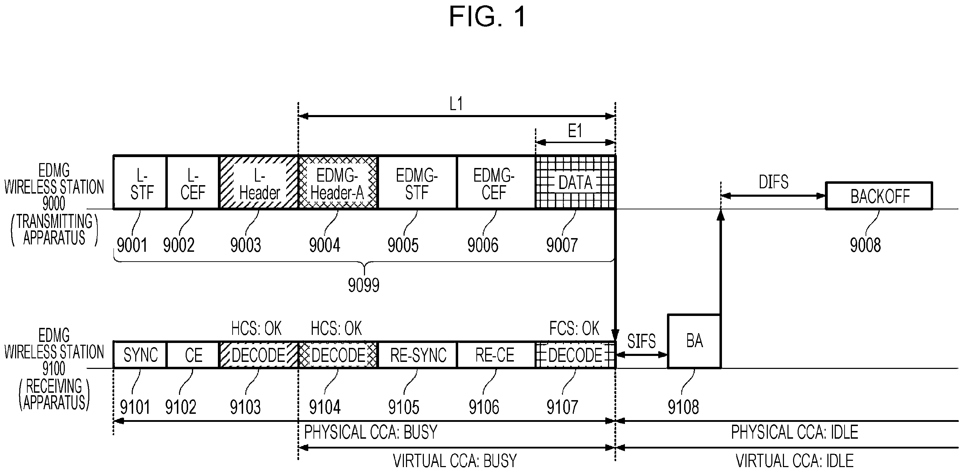

Fig. 1 is a diagram illustrating one example of a process of a transmission source EDMG wireless station 9000 and a destination EDMG wireless station 9100 in communication using EDMG PPDU presupposed by the present disclosure. In Fig. 1, the transmission source EDMG wireless station 9000 transmits an EDMG PPDU 9099 to the destination EDMG wireless station 9100.

The EDMG PPDU 9099 includes an L-STF 9001, an L-CEF 9002, an L-Header 9003, an EDMG-Header-A 9004, an EDMG-STF 9005, an EDMG-CEF 9006, and Data 9007. Note that the EDMG-STF 9005 and the EDMG-CEF 9006 are fields that exist then the EDMG PPDU 9099 is transmitted using MIMO technology or channel bonding technology.

The transmission source EDMG wireless station 9000 executes the following process in the transmission of the EDMG PPDU 9099.

The transmission source EDMG wireless station 9000 takes into account that a legacy wireless station not illustrated does not support the EDMG PPDU, or in other words, that a legacy wireless station will interpret the fields from the EDMG-Header-A 9004 as data fields, and causes a legacy wireless station to process the EDMG PPDU 9099 as a typical legacy PPDU. For this purpose, the transmission source EDMG wireless station 9000 converts the field length L1 time on the wireless channel of the combined fields of the EDMG-Header-A 9004, the EDMG-STF 9005, the EDMG-CEF 9006, and the Data 9007 to an octet size D1 on the basis of a predetermined calculation method, and sets the size in the Length field of the L-Header 9003. With this arrangement, the legacy wireless station is able to process the combined fields of the EDMG-Header-A 9004, the EDMG-STF 9005, the EDMG-CEF 9006, and the Data 9007 as a nominal data field.

The transmission source EDMG wireless station 9000 provides an EDMG Indication field in the L-Header 9003 and sets the field to 1 to indicate that the EDMG-Header-A 9004 exists in the EDMG PPDU 9099.

The transmission source EDMG wireless station 9000 provides a Length field in the EDMG-Header-A 9004, and sets the field to the octet size E1 of the Data 9007.

The destination EDMG wireless station 9100 executes the following process on the received EDMG PPDU 9099.

First, the destination EDMG wireless station 9100 uses the L-STF 9001 to execute a synchronization process 9101.

Next, the destination EDMG wireless station 9100 uses the L-CEF 9002 to execute channel estimation (CE) 9102. The destination EDMG wireless station 9100 is able to use the channel estimation result in a process of equalizing the fields from the L-Header 9003.

Next, the destination EDMG wireless station 9100 executes decoding 9103 of the L-Header 9003. In the decoding 9103, in the case in which an error is not detected by the header check sequence (HCS), the destination EDMG wireless station 9100 understands that the EDMG-Header-A 9004 exists in the EDMG PPDU 9099. Also, since the destination EDMG wireless station 9100 understands that the size of the nominal data field for the legacy wireless station is D1 octets, the destination EDMG wireless station 9100 converts D1 to the nominal data field length L1 according to a predetermined calculation method, and sets a virtual clear channel assessment (CCA) to busy for the duration of the L1 time. Herein, the virtual CCA is a function that virtually determines that the usage state of a wireless channel is busy on the basis of the nominal data field length.

Next, the destination EDMG wireless station 9100 executes decoding 9104 of the EDMG-Header-A 9004. In the decoding 9104, in the case in which an error is not detected by the HCS, the destination EDMG wireless station 9100 understands that the size of the Data 9007 is E3 octets.

Next, the destination EDMG wireless station 9100 uses the EDMG-STF 9005 to execute a re-synchronization process 9105.

Next, the destination EDMG wireless station 9100 uses the EDMG-CEF 9006 to execute channel re-estimation (re-CE) 9106 to equalize the data field transmitted using MIMO technology or channel bonding technology.

Next, the destination EDMG wireless station 9100 executes decoding 9107 of the Data 9007 in accordance with the set value (E1) of the Length field of the EDMG-Header-A 9004.

In the decoding 9107, in the case in which the destination EDMG wireless station 9100 does not detect an error by the FCS in the one or more MPDUs included in the Data 9007, the destination EDMG wireless station 9100, after standing by for the SIFS, transmits a block Ack (BA) 9108 to the transmission source EDMG wireless station 9000.

If the BA 9108 is received correctly, to obtain the right to transmit the next packet, the transmission source EDMG wireless station 9000 stands by for the duration of the DIFS, and then starts a backoff control 9008.

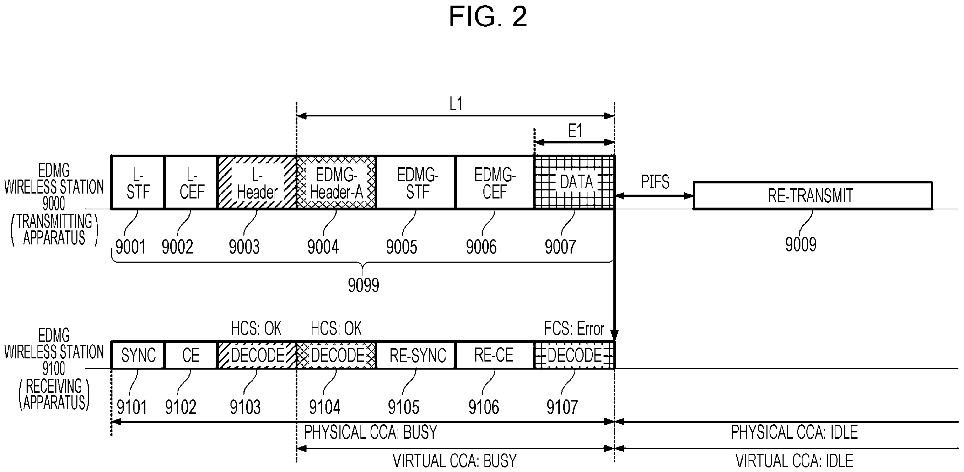

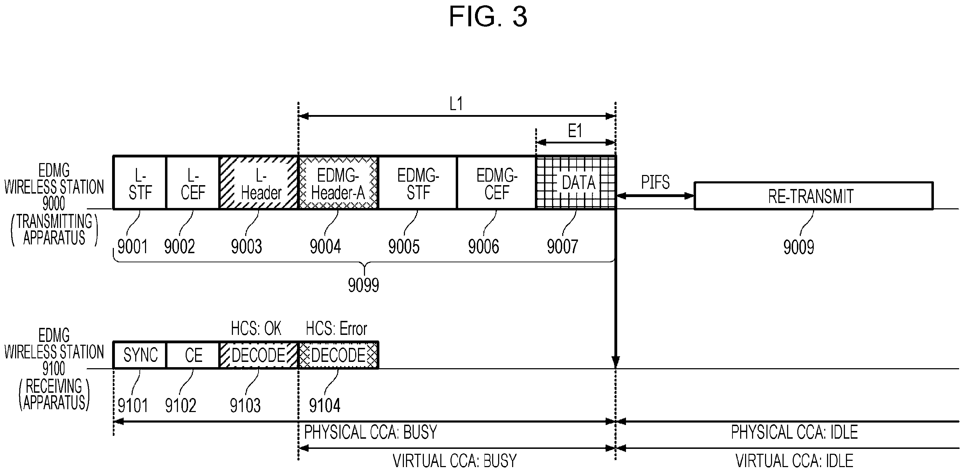

Note that in the case in which the destination EDMG wireless station 9100 detects an error by the frame check sequence (FCS) in all of the MPDUs in the decoding 9107 (see Fig. 2), or in the case of detecting an error by the HCS in the decoding 9104 (see Fig. 3), or in other words, in the case of detecting an error in the EDMG-Header-A 9004, since the size of the data field is not understood, the destination EDMG wireless station 9100 may have difficulty receiving the Data 9007 correctly, and the destination EDMG wireless station 9100 may not transmit the BA 9108. In this case, since the transmission source EDMG wireless station 9000 does not receive the BA 9108 within the point IFS (PIFS) from the completion of transmitting the EDMG PPDU 9099, the transmission source EDMG wireless station 9000 determines that the EDMG PPDU 9099 did not reach the destination EDMG wireless station 9100 correctly, and executes a re-transmission 9009 of the EDMG PPDU 9099.

Note that, although not illustrated, in the case in which the transmission source EDMG wireless station 9000 receives the BA 9108 and determines that re-transmission is necessary, the transmission source EDMG wireless station 9000 stands by for the duration of the SIFS or stands by for the duration of the DIFS after the completion of receiving the BA 9108, then executes the backoff control, and then re-transmits.

Note that the backoff control is a control in which, since when a wireless channel is released, the wireless stations that had been on standby while the wireless channel was in use would start transmitting all at once, to alleviate the extremely high probability of packets colliding on the wireless channel, a random number (backoff) is produced in each wireless station from when the wireless channel is released, and transmission is put on standby according to the produced random number.

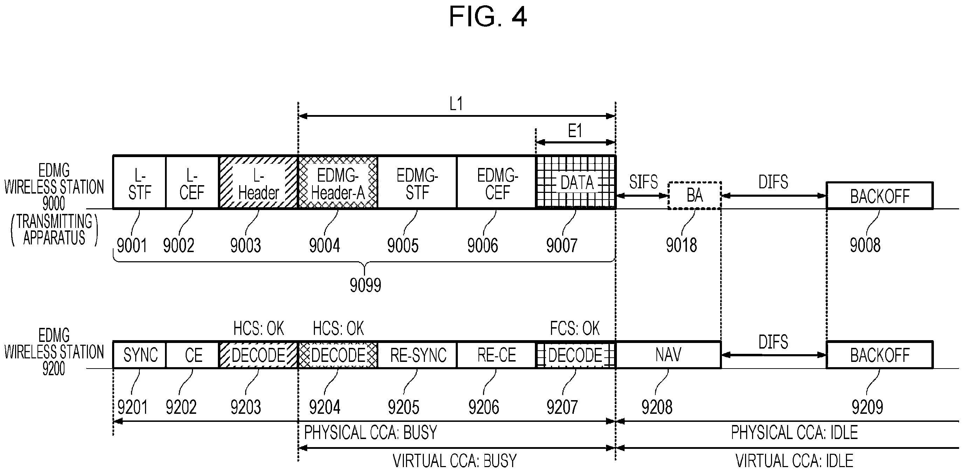

Fig. 4 is a diagram illustrating one example of a process of a transmission source EDMG wireless station 9000 and a non-destination EDMG wireless station 9200 in communication using EDMG PPDU presupposed by the present disclosure. In Fig. 4, assume that the transmission source EDMG wireless station 9000 has transmitted the EDMG PPDU 9099 to the destination EDMG wireless station 9100 in Fig. 1, and has received the BA 9108 from the destination EDMG wireless station 9100 correctly, while the non-destination EDMG wireless station 9200 is not a destination station of the EDMG PPDU 9099, but is in an environment where the EDMG PPDU 9099 is receivable.

The non-destination EDMG wireless station 9200 executes a process similar to the destination EDMG wireless station 9100 in Fig. 1 on the received EDMG PPDU 9099, but the processing after the decoding 9207 is different from the destination EDMG wireless station 9100. Specifically, in the case in which an error is not detected by the FCS for the one or more MPDUs in the decoding 9207, the non-destination EDMG wireless station 9200 understands that the EDMG PPDU 9099 is not addressed to the non-destination EDMG wireless station 9200 itself, and sets a network allocation vector (NAV) 9208 after changing the physical CCA or the virtual CCA from busy to idle. When the NAV 9208 ends, to obtain the right to transmit a packet, the non-destination EDMG wireless station 9200 stands by for the duration of the DIFS, and then starts a backoff control 9209. Herein, the physical CCA is a function that determines the usage state of a wireless channel on the basis of a detected level of the received signal power. while the value of the NAV is designated by a Duration/ID field in the MAC header of the Data 9007, and in Fig. 4, is taken to be NAV=SIFS+the time on the wireless channel of BA 9108.

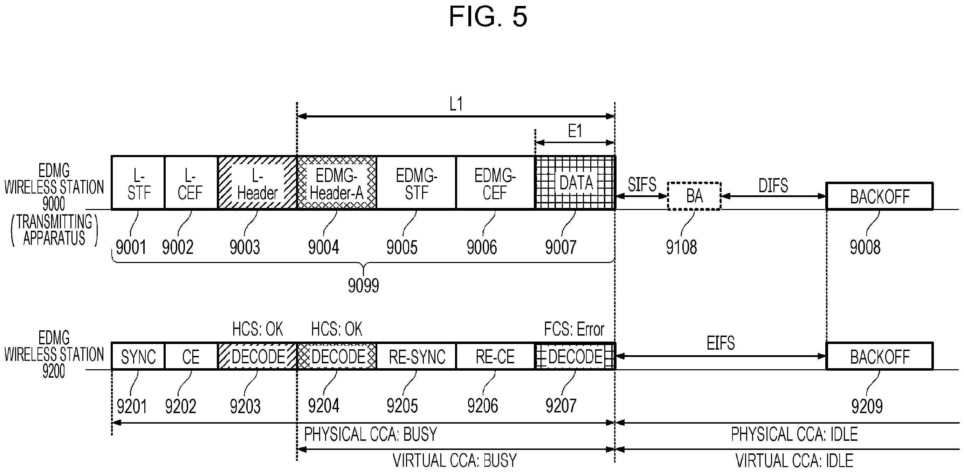

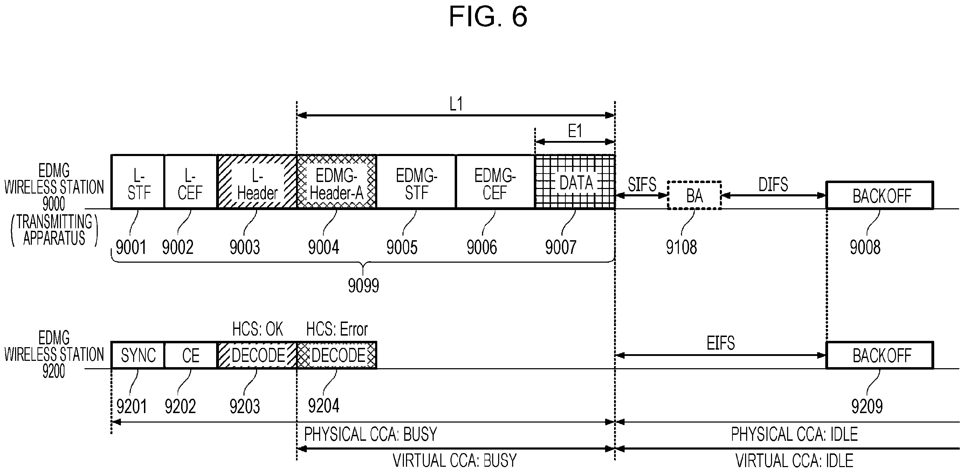

Note that in the case in which the non-destination EDMG wireless station 9200 detects an error by the FCS in all of the MPDUs in the decoding 9207 (see Fig. 5), or in the case of detecting an error by the HCS in the decoding 9204 (see Fig. 6), after the physical CCA or the virtual CCA changes from busy to idle, the non-destination EDMG wireless station 9200 stands by for the duration of an extended IFS (EIFS), and then starts the backoff control 9209. Herein, EISF=SIFS+the time on the wireless channel of the BA 9108+DIFS.

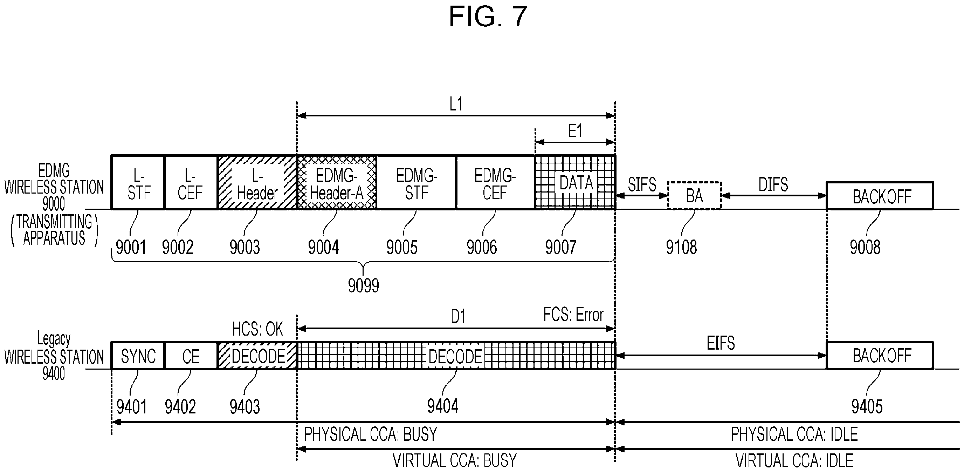

Fig. 7 is a diagram illustrating one example of a process of a transmission source EDMG wireless station 9000 and a legacy wireless station 9400 in communication using EDMG PPDU presupposed by the present disclosure. In Fig. 7, assume that the transmission source EDMG wireless station 9000 has transmitted the EDMG PPDU 9099 to the destination EDMG wireless station 9100 in Fig. 1, and has received the BA 9108 from the destination EDMG wireless station 9100 correctly, while the legacy wireless station 9400 is not a destination station of the EDMG PPDU 9099, but is in an environment where the EDMG PPDU 9099 is receivable.

As described earlier, the legacy wireless station 9400 does not support the EDMG PPDU, and therefore receives the EDMG PPDU 9099 as a typical legacy PPDU. In other words, the legacy STA 9400 executes a synchronization process 9401 and channel estimation (CE) 9402, followed by decoding 9403 of the L-Header 9003. In the decoding 9403, in the case in which an error is not detected by the HCS, the legacy wireless station 9400 is able to learn the size D1 of the nominal data field from the Length field.

Subsequently, the legacy wireless station 9400 executes decoding 9404 treating the fields from the EDMG-Header-A 9004 as a data field of the size D1 octets. Since the legacy wireless station 9400 also decodes the EDMG-Header-A 9004, the EDMG-STF 9005, and the EDMG-CEF 9006 in addition to the original data field, namely Data 9007, it is highly probable that an error will be detected by the FCS in all of the MPDUs.

In the case in which an error is detected in the decoding 9404, after the physical CCA or the virtual CCA changes from busy to idle, the legacy wireless station 9400 stands by for the duration of the EIFS, and then starts a backoff control 9405.

### (Embodiment 1)

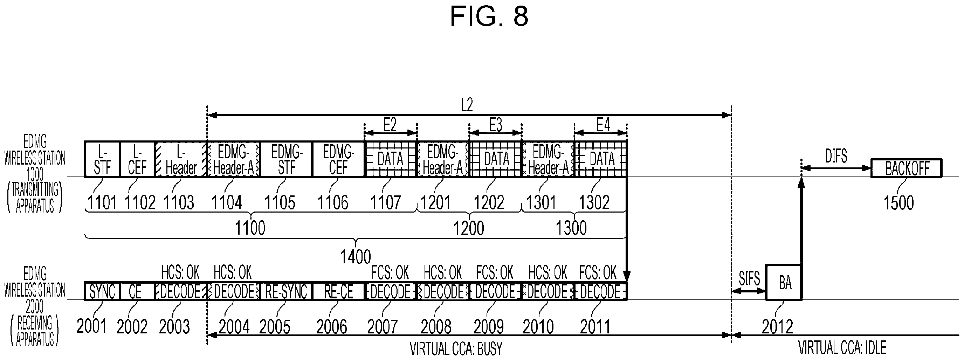

Fig. 8 is a diagram illustrating one example of fields transmitted by a transmission source EDMG wireless station 1000 and a process in a destination EDMG wireless station 2000 in communication using EDMG A-PPDU according to Embodiment 1. The transmission source EDMG wireless station 1000 transmits an EDMG A-PPDU 1400 to the destination EDMG wireless station 2000.

The EDMG A-PPDU 1400 includes a first EDMG PPDU 1100, a second EDMG PPDU 1200, and a third EDMG PPDU 1300.

The first EDMG PPDU 1100 includes an L-STF 1101, an L-CEF 1102, an L-Header 1103, an EDMG-Header-A 1104, an EDMG-STF 1105, an EDMG-CEF 1106, and Data 1107. The second EDMG PPDU 1200 includes an EDMG-Header-A 1201 and Data 1202. The third EDMG PPDU 1300 includes an EDMG-Header-A 1301 and Data 1302.

The transmission source EDMG wireless station 1000 executes the following process in the transmission of the EDMG A-PPDU 1400.

The transmission source EDMG wireless station 1000 takes into account that a legacy wireless station not illustrated does not support the EDMG PPDU and the EDMG A-PPDU, and to cause a legacy wireless station to process the EDMG A-PPDU 1400 as a single legacy PPDU, sets an Additional PPDU field in the L-Header 1103 to 0.

Also, the transmission source EDMG wireless station 1000 sets any time L2 equal to or greater than the total field length on the wireless channel of the combined fields of the EDMG-Header-A 1104, the EDMG-STF 1105, the EDMG-CEF 1106, the Data 1107, the EDMG-Header-A 1201, the Data 1202, the EDMG-Header-A 1301, and the Data 1302 as a nominal data field length. The transmission source EDMG wireless station 1000 converts the nominal data field length L2 to a nominal data octet size D2 on the basis of a predetermined calculation method, and sets the size in the Length field of the L-Header 1103.

The transmission source EDMG wireless station 1000 does not transmit newly aggregated EDMG PPDUs over an amount of time exceeding the nominal data field length L2.

With this arrangement, the transmission source EDMG wireless station 1000 is able to inform the legacy wireless station of the nominal data octet size D2.

The transmission source EDMG wireless station 1000 sets the octet size E2 of the Data 1107 in the Length field of the EDMG-Header-A 1104, sets the octet size E3 of the Data 1202 in the Length field of the EDMG-Header-A 1201, and sets the octet size E4 of the Data 1302 in the Length field of the EDMG-Header-A 1301.

The transmission source EDMG wireless station 1000 sets an EDMG Indication field to 1 in the L-Header 1103 to indicate that the EDMG-Header-A exists in each EDMG PPDU forming the EDMG A-PPDU 1400.

To indicate that the first EDMG PPDU 1100, the second EDMG PPDU 1200, and the third EDMG PPDU 1300 are aggregated, the transmission source EDMG wireless station 1000 provides an Additional PPDU field in the EDMG-Header-A 1104, the EDMG-Header-A 1201, and the EDMG-Header-A 1301, sets the Additional PPDU field to 1 in the EDMG-Header-A 1104 and the EDMG-Header-A 1201, and sets the Additional PPDU field to 0 in the EDMG-Header-A 1301.

The destination EDMG wireless station 2000 executes the following process on the received EDMG A-PPDU 1400.

First, the destination EDMG wireless station 2000 uses the L-STF 1101 to execute a synchronization process 2001.

Next, the destination EDMG wireless station 2000 uses the L-CEF 1102 to execute channel estimation (CE) 2002. The destination EDMG wireless station 2000 is able to use the channel estimation result in a process of equalizing the fields from the L-Header 1103.

Next, the destination EDMG wireless station 2000 performs a decoding process 2003 of the L-Header 1103. In the decoding 2003, in the case in which an error is not detected by the HCS, the destination EDMG wireless station 2000 determines that the EDMG-Header-A 1104 exists in the EDMG A-PPDU 1400, and acquires the nominal data field size D2 octets for a legacy wireless station. For this reason, the destination EDMG wireless station 2000 converts the nominal data field size D2 to the nominal data field length L2 according to a predetermined calculation method, and for the duration of the L2 time, sets the virtual CCA to busy.

Next, the destination EDMG wireless station 2000 executes decoding 2004 of the EDMG-Header-A 1104. In the decoding 2004, in the case in which an error is not detected by the HCS, the destination EDMG wireless station 2000 determines that the second EDMG PPDU 1200 exists following the first EDMG PPDU 1100, and acquires the size E2 octets of the Data 1107.

Next, the destination EDMG wireless station 2000 uses the EDMG-STF 1105 to execute a re-synchronization process 2005.

Next, the destination EDMG wireless station 2000 uses the EDMG-CEF 1106 to execute a channel re-estimation (re-CE) process 2006.

Next, the destination EDMG wireless station 2000 executes a decoding process 2007 of the Data 1107 in accordance with the set value (E2) of the Length field of the EDMG-Header-A 1104.

Next, because the destination EDMG wireless station 2000 recognizes the existence of the second EDMG PPDU 1200 from the result of the decoding process 2004, the destination EDMG wireless station 2000 performs a decoding process 2008 of the EDMG-Header-A 1201. In the decoding process 2008, in the case in which an error is not detected by the HCS, the destination EDMG wireless station 2000 determines that the third EDMG PPDU 1300 exists after the second EDMG PPDU 1200.

Next, the destination EDMG wireless station 2000 performs a decoding process 2009 of the Data 1202 in accordance with the set value (E3) of the Length field of the EDMG-Header-A 1301.

Next, because the destination EDMG wireless station 2000 recognizes the existence of the third EDMG PPDU 1300 from the result of the decoding process 2008, the destination EDMG wireless station 2000 performs a decoding process 2010 of the EDMG-Header-A 1301. In the decoding process 2010, in the case in which an error is not detected by the HCS, the destination EDMG wireless station 2000 recognizes that an additional EDMG PPDU does not exist after the third EDMG PPDU 1300.

Next, the destination EDMG wireless station 2000 executes decoding 2011 of the Data 1302 in accordance with the set value (E4) of the Length field of the EDMG-Header-A 1301.

Next, in the case in which an FCS error is not detected in one or more MPDUs in the decoding processes 2007, 2009, and 2011, after the virtual CCA changes from busy to idle, the destination EDMG wireless station 2000 stands by for the duration of the SIFS, and then transmits a block Ack (BA) 2012 to the transmission source EDMG wireless station 1000.

After the BA 2012 is received correctly, to transmit the next packet, the transmission source EDMG wireless station 1000 stands by for the duration of the DIFS, and then starts a backoff control 1500.

Note that, although not illustrated, in the case in which the BA 2012 indicates the existence of an MPDU that was not received correctly, or in the case in which an HCS error or an FCS error occurs in the decoding of the BA 2012, the transmission source EDMG wireless station 1000 stands by for the duration of the SIFS after the completion of receiving the BA 2012 and then re-transmits the MPDU that was not received correctly, or stands by for the duration of the DIFS, and after performing the backoff control 1500, re-transmits the MPDU that was not received correctly.

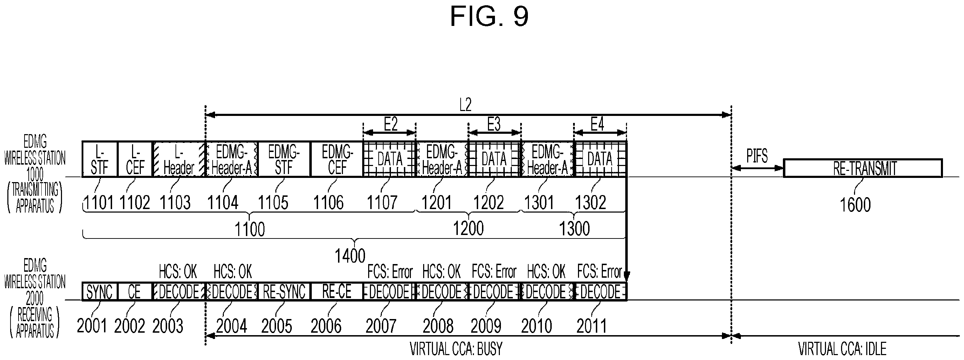

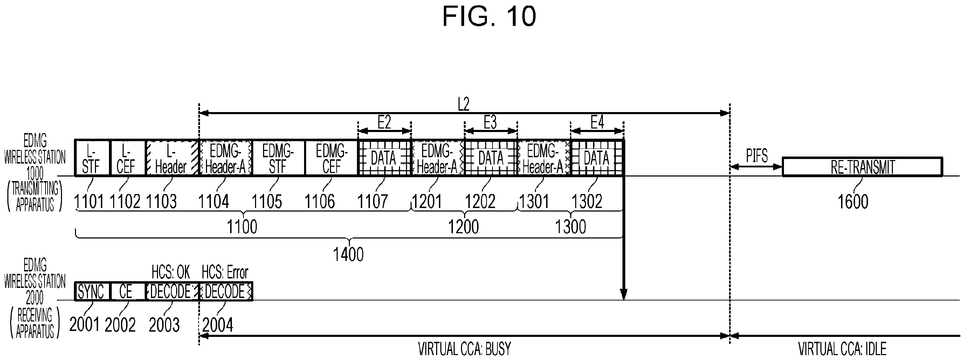

Note that in the case in which the destination EDMG wireless station 2000 detects an error by the FCS in all of the MPDUs in the decoding processes 2007, 2008, and 2011 (see Fig. 9), or in the case of detecting an error by the HCS in the decoding process 2004, the destination EDMG wireless station 2000 does not transmit the BA 2012. Note that in the case of detecting an error in the EDMG-Header-A 1104 of the first EDMG PPDU 1100 placed at the front, the destination EDMG wireless station 2000 does not receive the Data 1107, 1202, and 1302 correctly (see Fig. 10).

In this case, the transmission source EDMG wireless station 1000 does not receive the BA 2012 within the PIFS time from the end of the nominal data field length L2, and therefore determines that the EDMG A-PPDU 1400 has not reached the destination EDMG wireless station 2000 correctly, and executes a re-transmission process 1600 of the EDMG A-PPDU 1400.

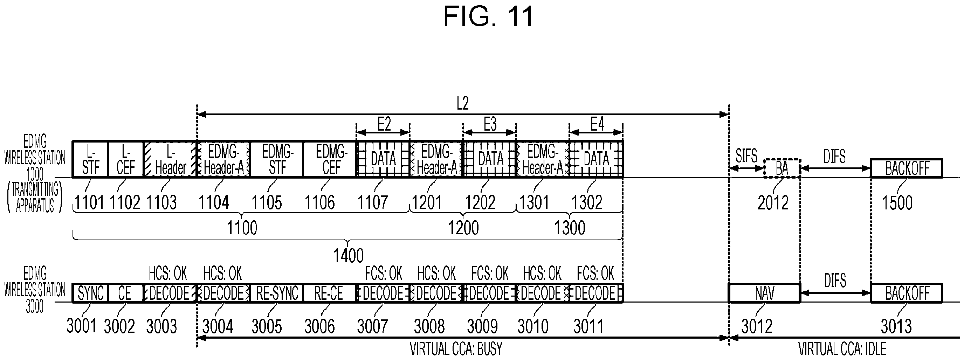

Fig. 11 is a diagram illustrating one example of fields transmitted by and a process executed by a transmission source EDMG wireless station 1000 as well as fields transmitted by and a process executed by a non-destination EDMG wireless station 3000 in communication using EDMG A-PPDU according to Embodiment 1.

The transmission source EDMG wireless station 1000 of Fig. 11 transmits the EDMG A-PPDU 1400 to the destination EDMG wireless station 2000 of Fig. 8 and correctly receives the BA 2012 from the destination EDMG wireless station 2000, while the non-destination EDMG wireless station 3000 of Fig. 11 is not a destination station of the EDMG A-PPDU 1400 of Fig. 11, but exists in an environment where the EDMG A-PPDU 1400 is receivable.

The non-destination EDMG wireless station 3000 of Fig. 11 executes a process similar to the destination EDMG wireless station 2000 of Fig. 8 on the received EDMG A-PPDU 1400, but the processing after the decoding process 3011 is different from the destination EDMG wireless station 2000 of Fig. 8.

Specifically, in the case in which an error is not detected by the FCS in one or more of the MPDUs obtained by the decoding processes 3007, 3009, and 3011, the non-destination EDMG wireless station 3000 determines that the destination of the EDMG A-PPDU 1400 is not the non-destination EDMG wireless station 3000, sets a NAV 3012 after the virtual CCA changes from busy to idle, and additionally, after the NAV 3012 ends, stands by for the duration of the DIFS, and starts a backoff control 3013.

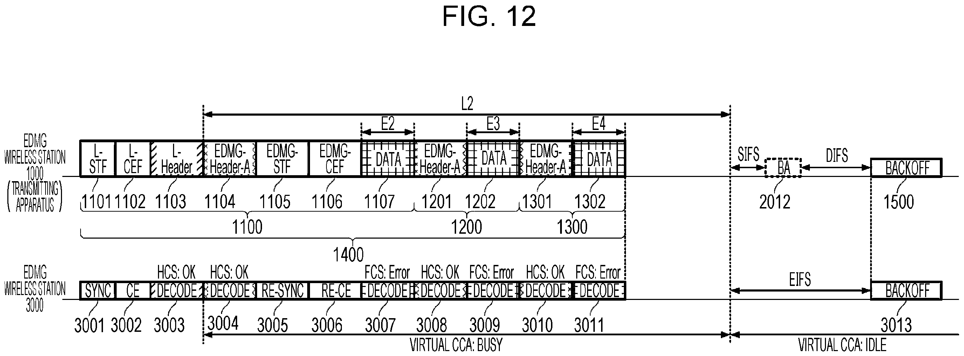

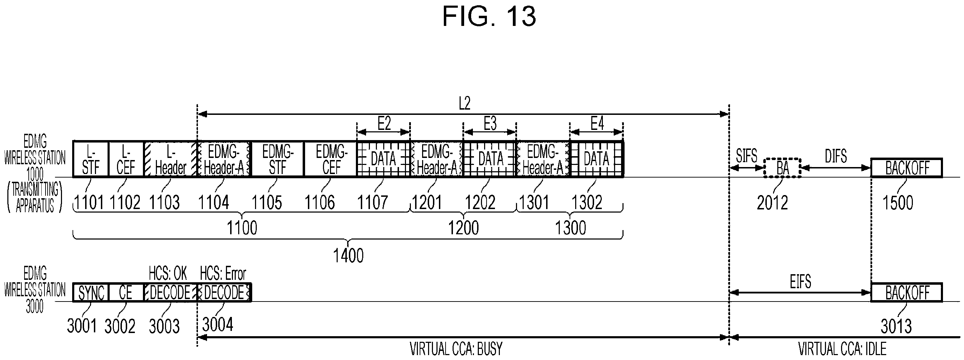

Note that in the case in which the non-destination EDMG wireless station 3000 detects an error by the FCS in all of the MPDUs obtained by the decoding processes 3007, 3009, and 3011 (see Fig. 12), or in the case of detecting an error by the HCS in the decoding process 3004 (see Fig. 13), after the virtual CCA changes from busy to idle, the non-destination EDMG wireless station 3000 stands by for the duration of the EIFS, and starts the backoff control 3013.

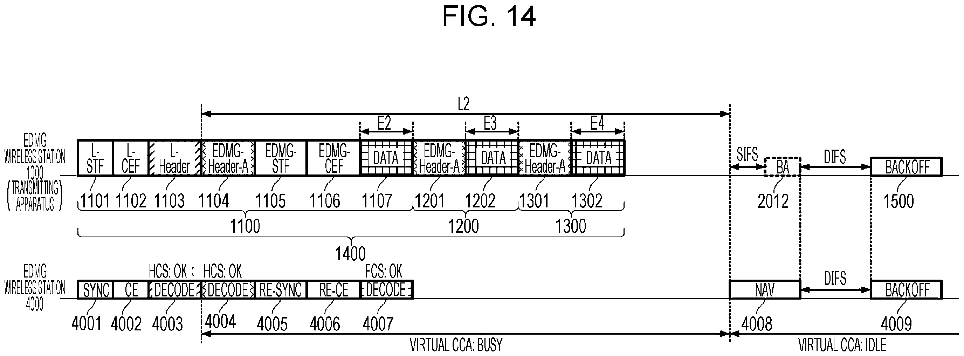

Fig. 14 is a diagram illustrating one example of fields transmitted by and a process executed by the transmission source EDMG wireless station 1000 as well as a process executed by an EDMG wireless station 4000 that does not support EDMG A-PPDU in communication using EDMG A-PPDU according to Embodiment 1. The transmission source EDMG wireless station 1000 of Fig. 14 transmits the EDMG A-PPDU 1400 to the destination EDMG wireless station 2000 of Fig. 8 and correctly receives the BA 2012, while the EDMG A-PPDU non-supporting EDMG wireless station 4000 of Fig. 14 is not a destination station of the EDMG A-PPDU 1400, but exists in an environment where the EDMG A-PPDU 1400 is receivable.

The EDMG A-PPDU non-supporting EDMG wireless station 4000 does not support the EDMG A-PPDU, and therefore executes a decoding process 4007 up to the Data 1107, and does not execute a decoding process on the fields from the EDMG-Header-A 1201. In the case in which an error is not detected by the FCS in one or more of the MPDUs obtained by the decoding process 4007, the EDMG A-PPDU non-supporting EDMG wireless station 4000 determines that the destination of the EDMG A-PPDU 1400 is not the EDMG A-PPDU non-supporting EDMG wireless station 4000, sets a NAV 4008 after the virtual CCA changes from busy to idle, and additionally, after the NAV 4008 ends, stands by for the duration of the DIFS, and starts a backoff control 4009.

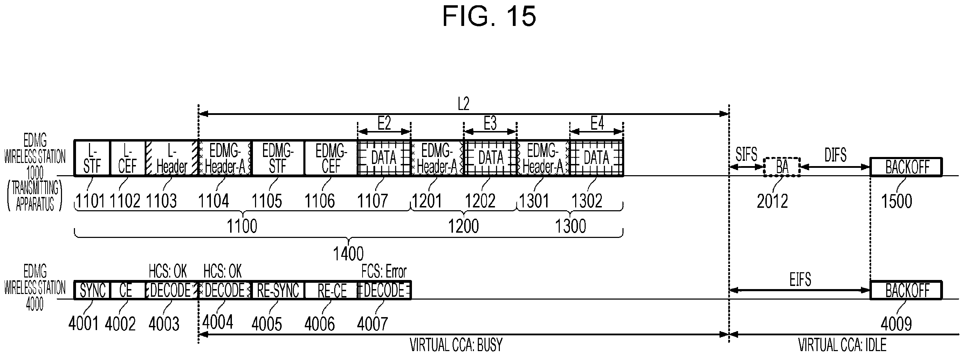

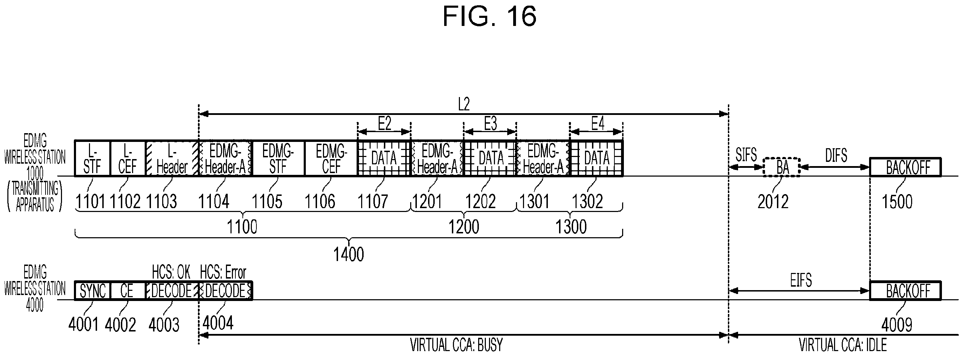

Note that in the case in which the EDMG A-PPDU non-supporting EDMG wireless station 4000 detects an error by the FCS in all of the MPDUs obtained by the decoding process 4007 (see Fig. 15), or in the case of detecting an error by the HCS in the decoding process 4004 (see Fig. 16), after the virtual CCA changes from busy to idle, the EDMG A-PPDU non-supporting EDMG wireless station 4000 stands by for the duration of the EIFS, and starts the backoff control 4009.

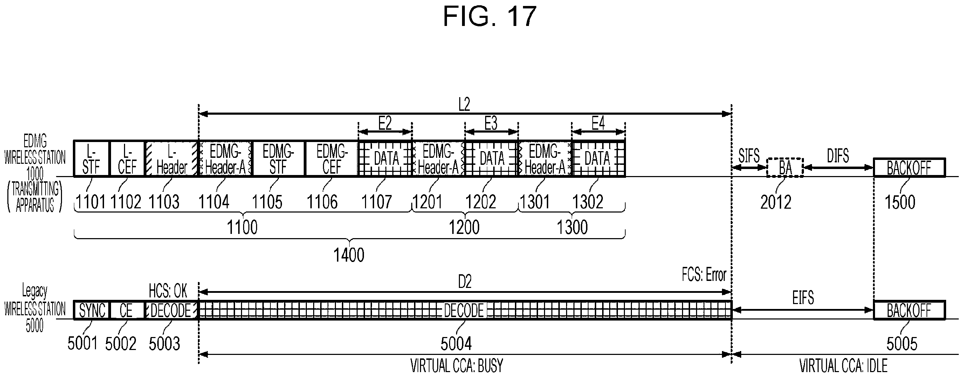

Fig. 17 is a diagram illustrating one example of fields transmitted by and a process executed by a transmission source EDMG wireless station 1000 as well as a process executed by a legacy wireless station 5000 in communication using EDMG A-PPDU according to Embodiment 1.

The transmission source EDMG wireless station 1000 of Fig. 17 transmits the EDMG A-PPDU 1400 to the destination EDMG wireless station 2000 of Fig. 8 and correctly receives the BA 2012, while the legacy wireless station 5000 of Fig. 17 is not a destination station of the EDMG A-PPDU 1400, but exists in an environment where the EDMG A-PPDU 1400 is receivable.

The legacy wireless station 5000 does not support the EDMG A-PPDU, and therefore processes the received EDMG A-PPDU 1400 as a typical legacy PPDU. In other words, the legacy wireless station 5000 executes a synchronization process 5001 and a channel estimation (CE) process 5002, followed by a decoding process 5003 of the L-Header 1103. In the decoding process 5003, in the case in which an error is not detected by the HCS, the legacy wireless station 5000 treats the EDMG A-PPDU 1400 as a single legacy PPDU on the basis of the Additional PPDU field set to 0, and additionally recognizes the size D2 of the nominal data field from the Length field.

Subsequently, the legacy wireless station 5000 executes a decoding process 5004 treating the fields from the EDMG-Header-A 1104 as a data field of the size D2 octets. In the decoding process 5004, the legacy wireless station 5000 detects an error by the FCS in all of the MPDUs.

In the decoding process 5004, in the case of detecting an error for all MPDUs, the legacy wireless station 5000 calculates the data field length L2 time on the wireless channel from the octet size D2 of the nominal data field, and after the virtual CCA changes from busy to idle, stands by for the duration of the EIFS, and starts a backoff control 5005.

By the above, according to Embodiment 1, the backoff control start timings of an EDMG wireless station and a legacy wireless station may be aligned, and a transmit opportunity may be given uniformly to each wireless station.

### (Embodiment 2)

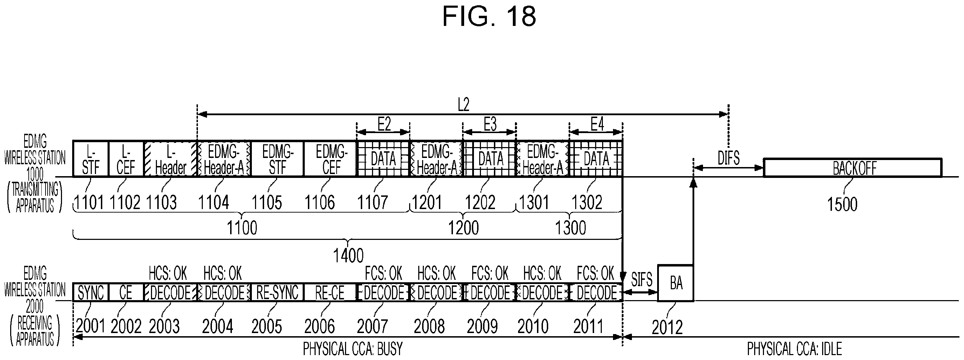

Fig. 18 is a diagram illustrating one example of fields transmitted by and processes executed by a transmission source EDMG wireless station 1000 and a destination EDMG wireless station 2000 in communication using EDMG A-PPDU according to Embodiment 2, and corresponds to Fig. 8 of Embodiment 1. Portions which are the same as Fig. 8 are denoted with the same signs, and description thereof is omitted.

In Fig. 8, after the virtual CCA changes from busy to idle, the destination EDMG wireless station 2000 stands by for the duration of the SIFS and transmits the BA 2012 to the transmission source EDMG wireless station 1000, while the transmission source EDMG wireless station 1000 stands by for the duration of the DIFS from the completion of receiving the BA 2012, and starts the backoff control 1500. However, in Fig. 18, after the physical CCA changes from busy to idle, the destination EDMG wireless station 2000 stands by for the duration of the SIFS and transmits the BA 2012, while the transmission source EDMG wireless station 1000 stands by for the duration of the DIFS after receiving the BA 2012 correctly, and starts the backoff control 1500. In other words, the transmission timing of the block Ack by the receiving station, namely the destination EDMG wireless station 2000, is different from Embodiment 1.

Note that, although not illustrated, in the case in which the BA 2012 indicates the existence of an MPDU that was not received correctly, or in the case in which an HCS error or an FCS error occurs in the decoding process of the BA 2012, the transmission source EDMG wireless station 1000 receives the BA 2012, stands by for the duration of the SIFS, and then re-transmits a packet including the MPDU that was not received correctly, or stands by for the duration of the DIFS, and after performing the backoff control, re-transmits a packet including the MPDU that was not received correctly.

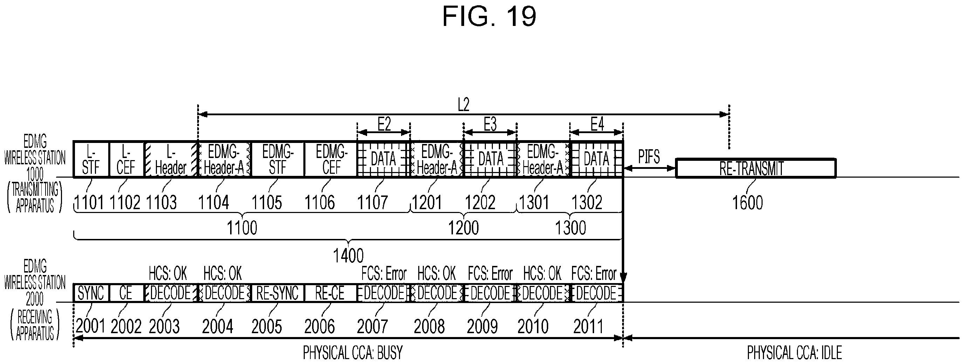

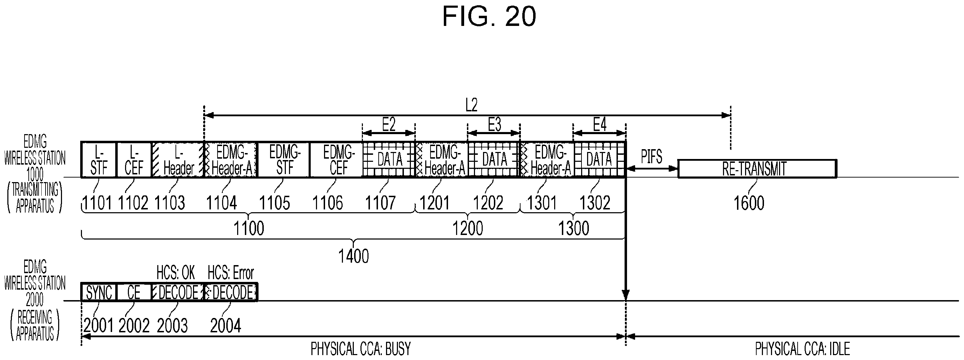

Note that in the case in which the destination EDMG wireless station 2000 detects an error by the FCS in all of the MPDUs obtained by the decoding processes 2007, 2008, and 2011 (see Fig. 19), or in the case of detecting an error by the HCS in the decoding process 2004 (see Fig. 20), the destination EDMG wireless station 2000 does not transmit the BA 2012. In this case, the transmission source EDMG wireless station 1000 does not receive the BA 2012 within the PIFS time from the completion of transmitting the EDMG A-PPDU 1400, and therefore determines that the EDMG A-PPDU 1400 has not reached the destination EDMG wireless station 2000 correctly, and executes the re-transmission process 1600 of the EDMG A-PPDU 1400.

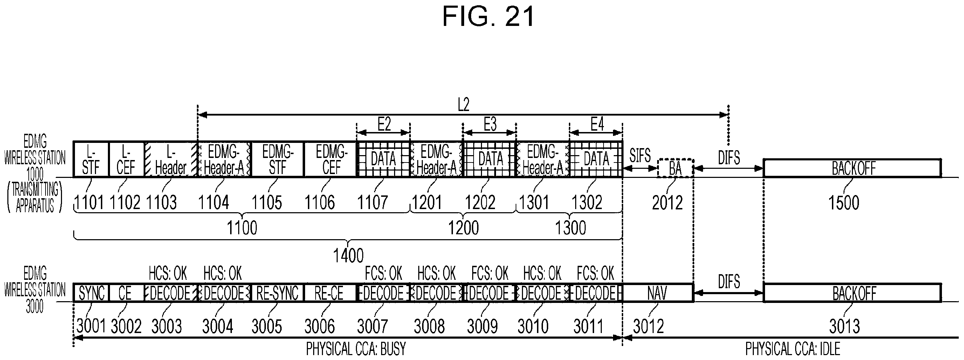

Fig. 21 is a diagram illustrating one example of fields transmitted by and processes executed by a transmission source EDMG wireless station 1000 and a non-destination EDMG wireless station 3000 in communication using EDMG A-PPDU according to Embodiment 2, and corresponds to Fig. 11 of Embodiment 1. Portions which are the same as Fig. 11 are denoted with the same signs, and description thereof is omitted.

In Fig. 11, after the virtual CCA that is busy for the duration of the nominal data field length L2 changes to idle, the non-destination EDMG wireless station 3000 sets the NAV 3012, and after the NAV 3012 ends, stands by for the duration of the DIFS, and starts the backoff control 3013. However, in Fig. 21, after the physical CCA changes from busy to idle partway through the nominal data field length L2, the non-destination EDMG wireless station 3000 sets the NAV 3012, additionally stands by for the duration of the DIFS, and starts the backoff control 3013.

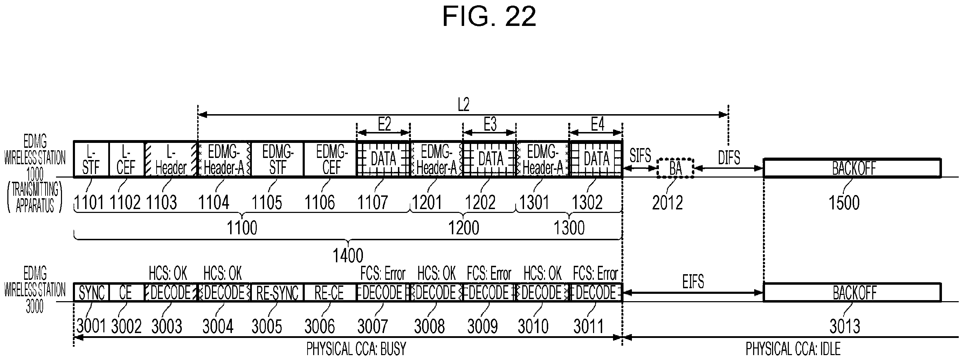

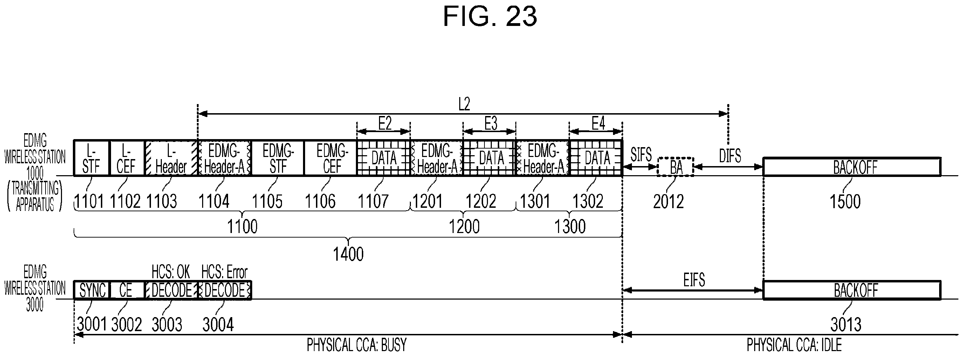

Note that in the case in which the non-destination EDMG wireless station 3000 detects an error by the FCS in all of the MPDUs obtained by the decoding processes 3007, 3009, and 3011 (see Fig. 22), or in the case of detecting an error by the HCS in the decoding 3004 (see Fig. 23), after the physical CCA changes from busy to idle, the non-destination EDMG wireless station 3000 stands by for the duration of the EIFS, and starts the backoff control 3013.

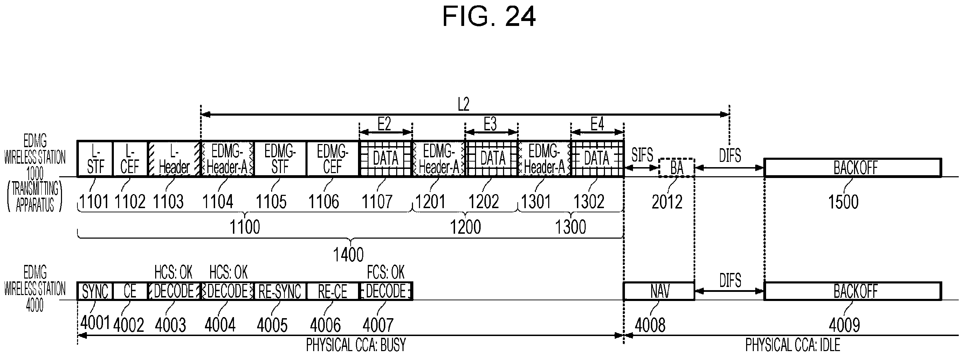

Fig. 24 is a diagram illustrating one example of fields transmitted by and processes executed by a transmission source EDMG wireless station 1000 and an EDMG A-PPDU non-supporting EDMG wireless station 4000 in communication using EDMG A-PPDU according to Embodiment 2, and corresponds to Fig. 14 of Embodiment 1. Portions which are the same as Fig. 14 are denoted with the same signs, and description thereof is omitted.

In Fig. 14, after the virtual CCA that is busy for the duration of the nominal data field length L2 changes to idle, the EDMG A-PPDU non-supporting EDMG wireless station 4000 sets the NAV 4008, and after the NAV 4008 ends, stands by for the duration of the DIFS, and starts the backoff control 4009. However, in Fig. 24, after the physical CCA changes from busy to idle partway through the nominal data field length L2, the EDMG A-PPDU non-supporting EDMG wireless station 4000 sets the NAV 4008, and after the NAV 4008 ends, stands by for the duration of the DIFS, and starts the backoff control 4009.

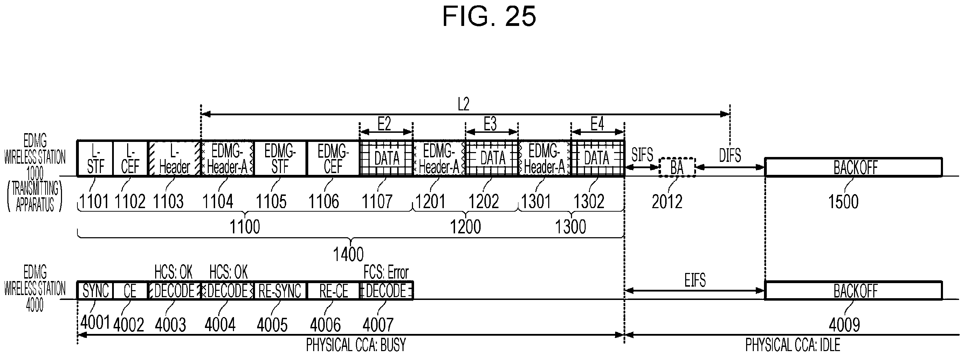

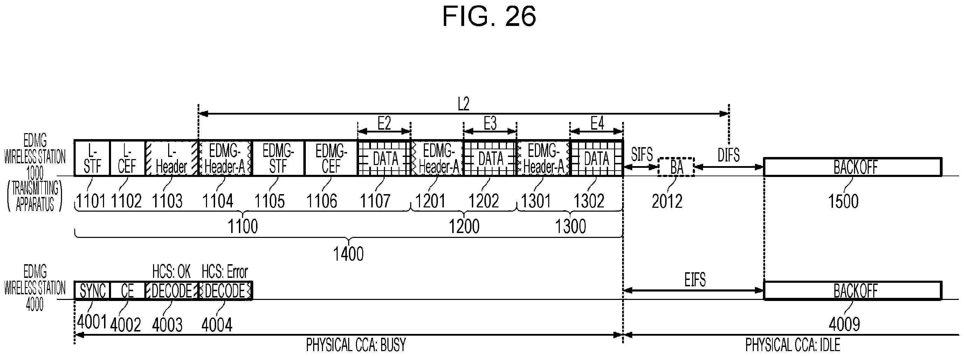

Note that in the case in which the EDMG A-PPDU non-supporting EDMG wireless station 4000 detects an error by the FCS in all of the MPDUs obtained by the decoding 4007 (see Fig. 25), or in the case of detecting an error by the HCS in the decoding 4004 (see Fig. 26), after the physical CCA changes from busy to idle, the EDMG A-PPDU non-supporting EDMG wireless station 4000 stands by for the duration of the EIFS, and starts the backoff control 4009.

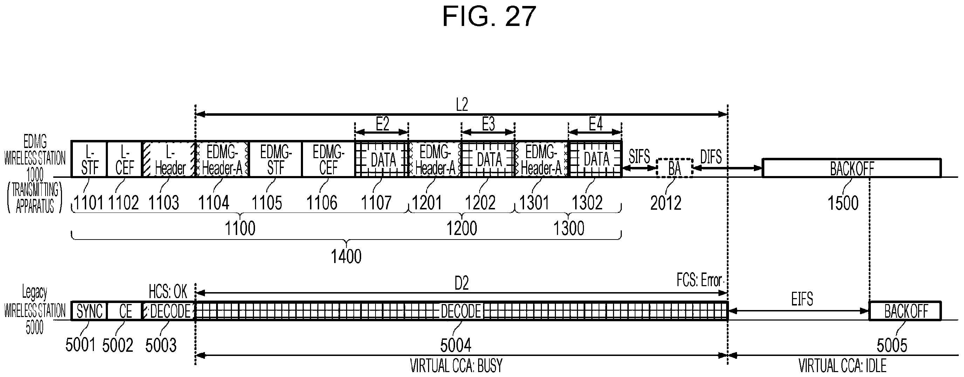

Fig. 27 is a diagram illustrating one example of fields transmitted by and processes executed by a transmission source EDMG wireless station 1000 and a legacy wireless station 5000 in communication using EDMG A-PPDU according to Embodiment 2, and corresponds to Fig. 17 of Embodiment 1. Portions which are the same as Fig. 17 are denoted with the same signs, and description thereof is omitted.

In Fig. 27, because the transmission source EDMG wireless station 1000 receives the BA 2012 partway through the nominal data field length L2, the timing at which to start the backoff control 1500 is earlier compared to Fig. 17, but the timing at which the legacy wireless station 5000 starts the backoff control 5005 is the same as Fig. 17. As a result, in Fig. 27, since the backoff control starting timing of the EDMG wireless station is earlier than the backoff control start timing of the legacy wireless station, the EDMG wireless station is advantageously given a transmit opportunity.

By the above, according to Embodiment 2, even in the case in which the transmission source EDMG wireless station 1000 sets a long L2 compared to the actual frame length of the EDMG A-PPDU 1400, the destination EDMG wireless station 2000 is able to transmit the BA 2012 after the completion of receiving the EDMG A-PPDU 1400, without being interrupted by another wireless station.

### (Embodiment 3)

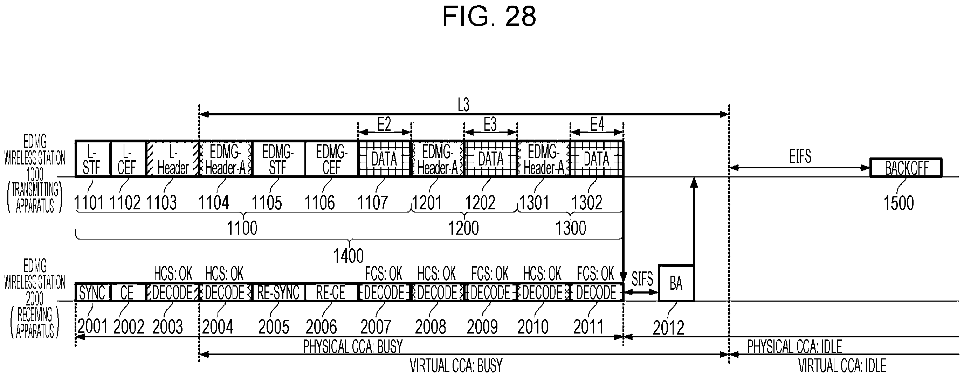

Fig. 28 is a diagram illustrating one example of fields transmitted by and processes executed by a transmission source EDMG wireless station 1000 and a destination EDMG wireless station 2000 in communication using EDMG A-PPDU according to Embodiment 3, and corresponds to Fig. 8 of Embodiment 1. Portions which are the same as Fig. 8 are denoted with the same signs, and description thereof is omitted.

In Fig. 8, the transmission source EDMG wireless station 1000 converts any time L2 equal to or greater than the combined field length of the EDMG-Header-A 1104, the EDMG-STF 1105, the EDMG-CEF 1106, the Data 1107, the EDMG-Header-A 1201, the Data 1202, the EDMG-Header-A 1301, and the Data 1302 to the octet size D2 on the basis of a predetermined calculation method and sets the size in the Length field of the L-Header 1103. However, in Fig. 28, the transmission source EDMG wireless station 1000 sets any time L3 equal to or greater than the total time of the combined field length of the EDMG-Header-A 1104, the EDMG-STF 1105, the EDMG-CEF 1106, the Data 1107, the EDMG-Header-A 1201, the Data 1202, the EDMG-Header-A 1301, and the Data 1302, the frame length of the BA 2012, and the SIFS time as a nominal data field length, converts the nominal data field length L3 to a nominal data octet size D3 on the basis of a predetermined calculation method, and sets the size in the Length field of the L-Header 1103. Additionally, the transmission source EDMG wireless station 1000 does not transmit newly aggregated EDMG PPDUs over an amount of time obtained by subtracting the frame length of the BA 2012 and the SIFS time from the nominal data field length L3.

Also, in Fig. 8, in the case of receiving the BA 2012 correctly, the transmission source EDMG wireless station 1000 stands by for the duration of the DIFS and starts the backoff control 1500, but in Fig. 28, after the virtual CCA changes from busy to idle, the transmission source EDMG wireless station 1000 stands by for the duration of the EIFS, and starts the backoff control 1500.

Note that, although not illustrated, in the case in which the BA 2012 indicates the existence of an MPDU that was not received correctly, or in the case in which an HCS error or an FCS error occurs in the decoding of the BA 2012, the transmission source EDMG wireless station 1000 stands by for the duration of the PIFS from the completion of the nominal data field length L3, and then executes a re-transmission process 1600 of a packet including the MPDU that was not received correctly, or stands by for the duration of the DIFS, and after the backoff control ends, re-transmits a packet including the MPDU that was not received correctly.

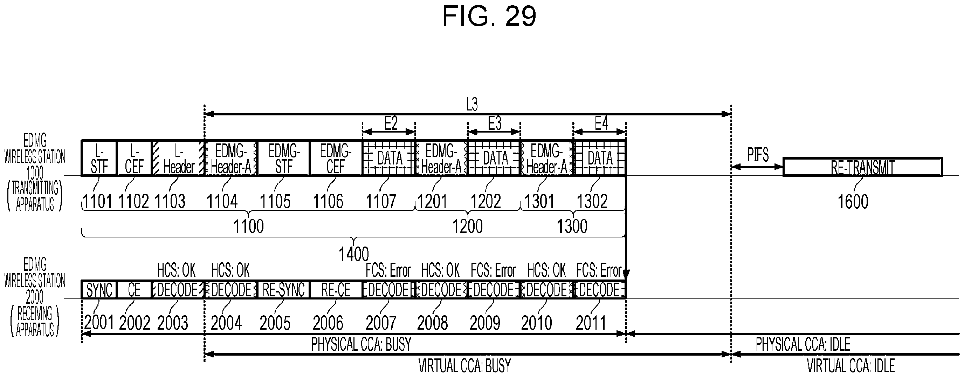

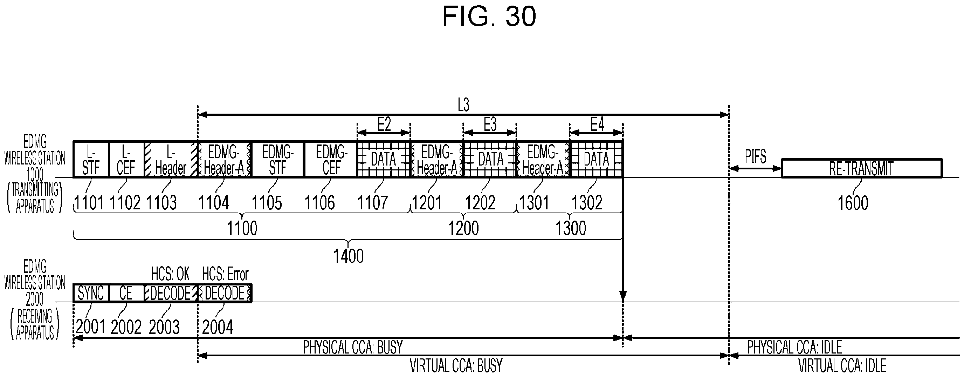

Note that in the case in which the destination EDMG wireless station 2000 detects an error by the FCS in all of the MPDUs obtained by the decoding processes 2007, 2009, and 2011 (see Fig. 29), or in the case of detecting an error by the HCS in the decoding 2004 (see Fig. 30), the destination EDMG wireless station 2000 does not transmit the BA 2012. In this case, the transmission source EDMG wireless station 1000 does not receive the BA 2012 within the PIFS time from the completion of transmitting the EDMG A-PPDU 1400, and therefore determines that the EDMG A-PPDU 1400 has not reached the destination EDMG wireless station 2000 correctly, stands by for the duration of the PIFS from the end of the nominal data field length L3, and executes the re-transmission process 1600 of the EDMG A-PPDU 1400.

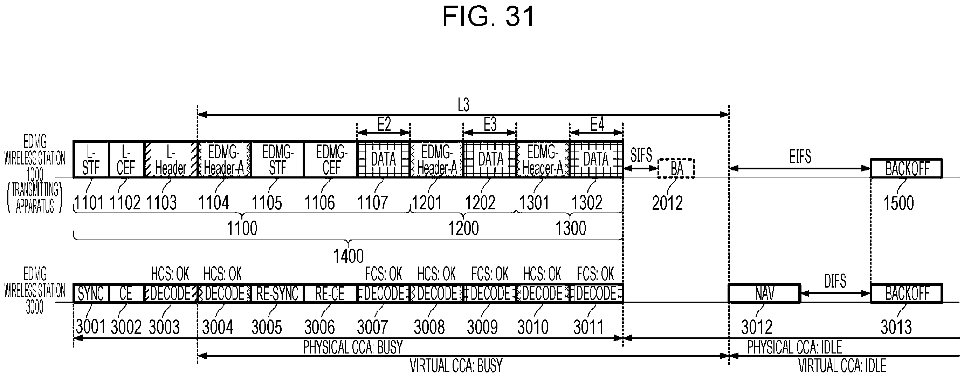

Fig. 31 is a diagram illustrating one example of fields transmitted by and processes executed by a transmission source EDMG wireless station 1000 and a non-destination EDMG wireless station 3000 in communication using EDMG A-PPDU according to Embodiment 3, and corresponds to Fig. 11 of Embodiment 1. Portions which are the same as Fig. 11 are denoted with the same signs, and description thereof is omitted.

Similarly to Fig. 11, in Fig. 31, after the virtual CCA changes from busy to idle, the non-destination EDMG wireless station 3000 sets the NAV 3012, and after the end of the NAV 3012, stands by for the duration of the DIFS, and starts the backoff control 3013.

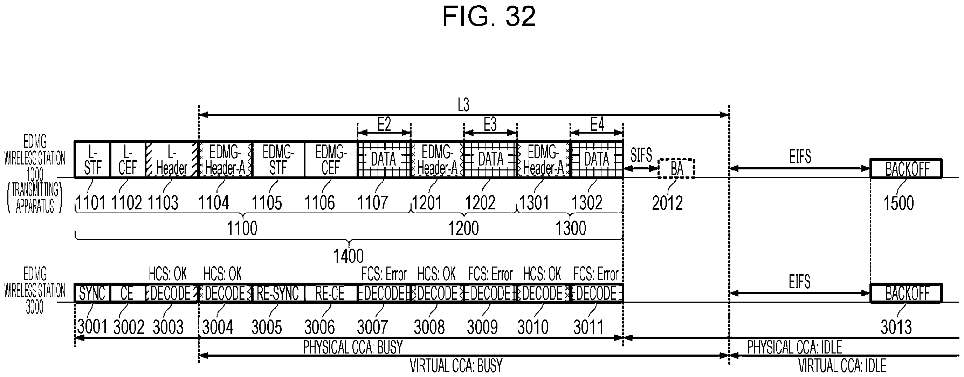

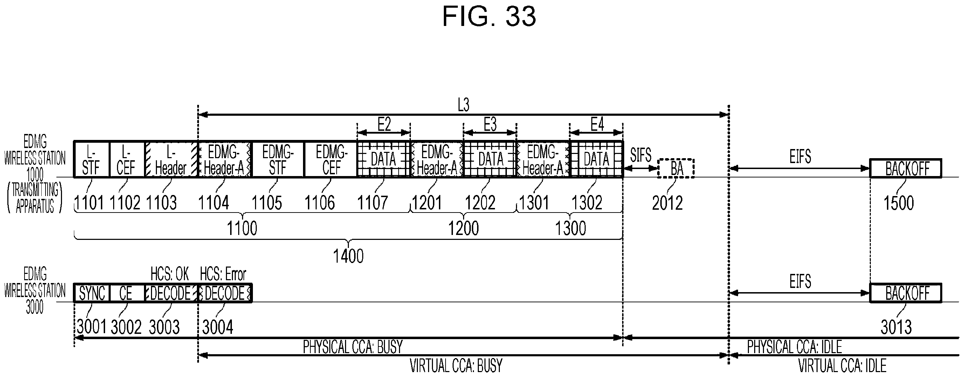

Note that in the case in which the non-destination EDMG wireless station 3000 detects an error by the FCS in all of the MPDUs obtained by the decoding processes 3007, 3009, and 3011 (see Fig. 32), or in the case of detecting an error by the HCS in the decoding 3004 (see Fig. 33), after the virtual CCA changes from busy to idle, the non-destination EDMG wireless station 3000 stands by for the duration of the EIFS, and starts the backoff control 3013. These processes are the same as the processes of the non-destination EDMG wireless station 3000 in Figs. 12 and 13 of Embodiment 1.

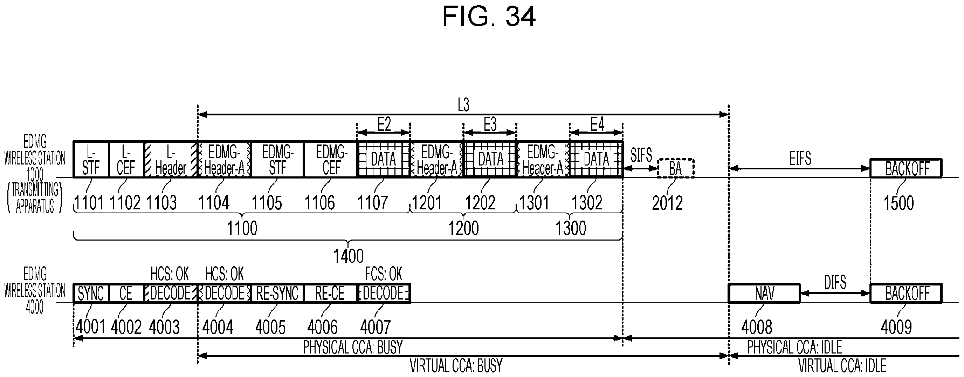

Fig. 34 is a diagram illustrating one example of fields transmitted by and processes executed by a transmission source EDMG wireless station 1000 and an EDMG A-PPDU non-supporting EDMG wireless station 4000 in communication using EDMG A-PPDU according to Embodiment 3, and corresponds to Fig. 14 of Embodiment 1. Portions which are the same as Fig. 14 are denoted with the same signs, and description thereof is omitted.

Similarly to Fig. 14, in Fig. 34, after the virtual CCA changes from busy to idle, the EDMG A-PPDU non-supporting EDMG wireless station 4000 sets the NAV 4008, and after the end of the NAV 4008, stands by for the duration of the DIFS, and starts the backoff control 4009. This process is the same as the process of the EDMG A-PPDU non-supporting EDMG wireless station 4000 in Fig. 14 of Embodiment 1.

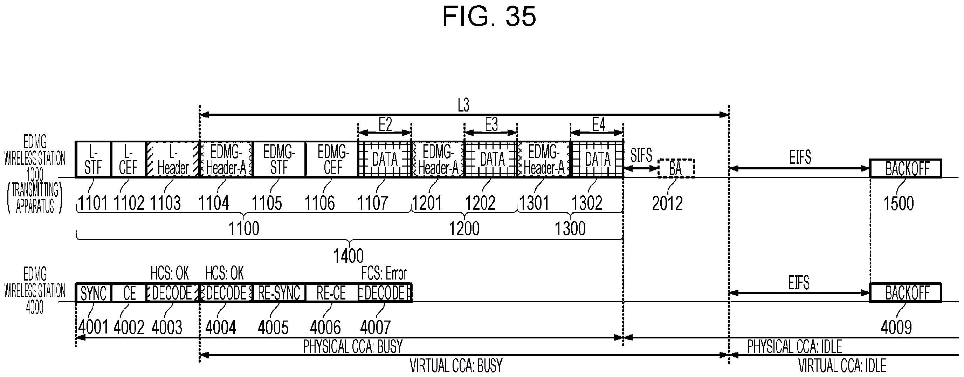

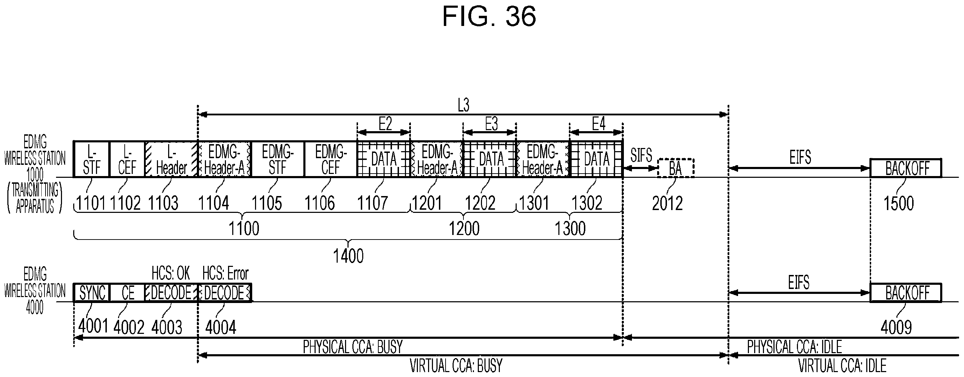

Note that in the case in which the EDMG A-PPDU non-supporting EDMG wireless station 4000 detects an error by the FCS in all of the MPDUs obtained by the decoding process 4007 (see Fig. 35), or in the case of detecting an error by the HCS in the decoding process 4004 (see Fig. 36), after the virtual CCA changes from busy to idle, the EDMG A-PPDU non-supporting EDMG wireless station 4000 stands by for the duration of the EIFS, and starts the backoff control 4009. These processes are the same as the processes of the EDMG A-PPDU non-supporting EDMG wireless station 4000 in Figs. 15 and 16 of Embodiment 1.

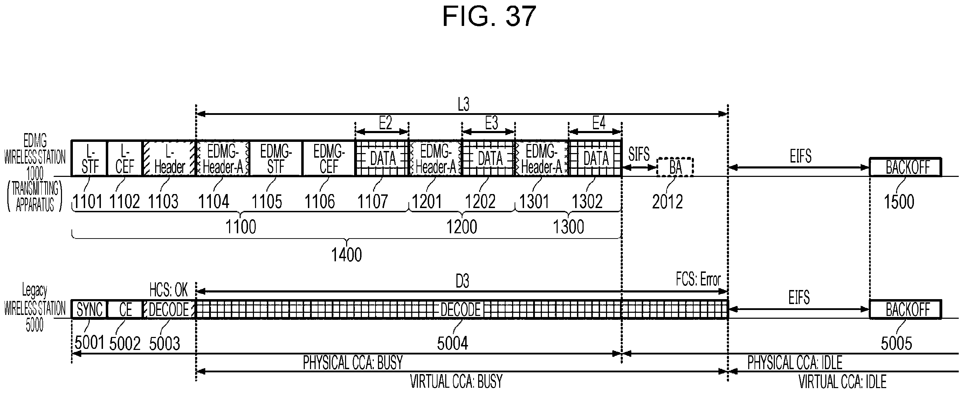

Fig. 37 is a diagram illustrating one example of fields transmitted by and processes executed by a transmission source EDMG wireless station 1000 and a legacy wireless station 5000 in communication using EDMG A-PPDU according to Embodiment 3, and corresponds to Fig. 17 of Embodiment 1. Portions which are the same as Fig. 17 are denoted with the same signs, and description thereof is omitted.

Similarly to Fig. 17, in Fig. 37, after the nominal data field length L3 ends, the transmission source EDMG wireless station 1000 stands by for the duration of the EIFS and starts the backoff control 1500, while after the virtual CCA changes from busy to idle, the legacy wireless station 5000 stands by for the duration of the EIFS and starts the backoff control 5005. For this reason, the timings at which the transmission source EDMG wireless station 1000 and the legacy wireless station 5000 start backoff control are aligned.

By the above, according to Embodiment 3, even in the case in which the transmission source EDMG wireless station 1000 sets a long L3 compared to the actual frame length of the EDMG A-PPDU 1400, the destination EDMG wireless station 2000 is able to transmit the BA 2012 after the completion of receiving the EDMG A-PPDU 1400, while moderating interruptions by other wireless stations. Also, the backoff control start timings of an EDMG wireless station and a legacy wireless station may be aligned, and a transmit opportunity may be given uniformly to each wireless station.

Note that in Embodiment 3, the transmission source EDMG wireless station 1000 sets any time L3 equal to or greater than the total time of the combined field length of the EDMG-Header-A 1104, the EDMG-STF 1105, the EDMG-CEF 1106, the Data 1107, the EDMG-Header-A 1201, the Data 1202, the EDMG-Header-A 1301, and the Data 1302, the frame length of the BA 2012, and the SIFS time as a nominal data field length, and does not transmit newly aggregated EDMG PPDUs exceeding a time obtained by subtracting the frame length of the BA 2012 and the SIFS time from the nominal data field length L3. However, like in Embodiment 1, the transmission source EDMG wireless station 1000 may also set any time equal to or greater than the combined field length of the EDMG-Header-A 1104, the EDMG-STF 1105, the EDMG-CEF 1106, the Data 1107, the EDMG-Header-A 1201, the Data 1202, the EDMG-Header-A 1301, and the Data 1302 as the nominal data field length L3, and not transmit newly aggregated EDMG PPDUs exceeding the nominal data field length L3. In this case, the behavior of each wireless station is the same, except that the BA 2012 is transmitted past the nominal data field length L3.

### (Embodiment 4)

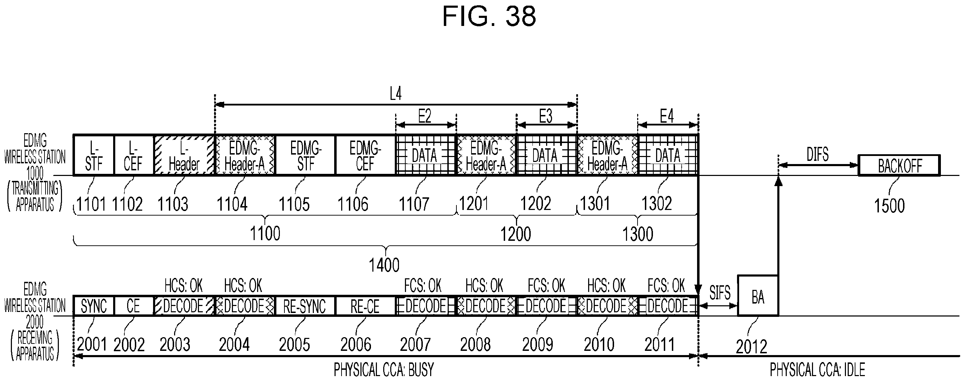

Fig. 38 is a diagram illustrating one example of fields transmitted by and processes executed by a transmission source EDMG wireless station 1000 and a destination EDMG wireless station 2000 in communication using EDMG A-PPDU according to Embodiment 4, and corresponds to Fig. 8 of Embodiment 1. Portions which are the same as Fig. 8 are denoted with the same signs, and description thereof is omitted.

The transmission source EDMG wireless station 1000 of Fig. 8 converts any time L2 equal to or greater than the combined field length of the EDMG-Header-A 1104, the EDMG-STF 1105, the EDMG-CEF 1106, the Data 1107, the EDMG-Header-A 1201, the Data 1202, the EDMG-Header-A 1301, and the Data 1302 to an octet size D2 on the basis of a predetermined calculation method, and sets the size in the Length field of the L-Header 1103, but in Fig. 38, the transmission source EDMG wireless station 1000 sets a nominal data field length L4 for a legacy wireless station from a data size known in advance before the transmission of the EDMG A-PPDU 1400, such as a data size accumulated in a buffer, for example, converts L4 into a nominal data octet size D4 on the basis of a predetermined calculation method, and sets the size in the Length field of the L-Header 1103. In Fig. 38, the Data 1107 and 1202 are accumulated in a buffer.

Also, in Fig. 8, the transmission source EDMG wireless station 1000 does not transmit newly aggregated EDMG PPDUs exceeding the nominal data field length L2, but in Fig. 38, in the case in which the Data 1302 to be added is input into the buffer before the transmission of the EDMG-Header-A 1201 of the second EDMG PPDU 1200 placed at the tail end when starting transmission, the transmission source EDMG wireless station 1000 may aggregate the third EDMG PPDU 1300 after the second EDMG PPDU 1200.

The operations of the destination EDMG wireless station 2000 in Fig. 38 are the same as the operations illustrated in Fig. 18 of Embodiment 2.

Note that, although not illustrated, in the case in which the BA 2012 indicates the existence of an MPDU that was not received correctly, or in the case in which an HCS error or an FCS error occurs in the decoding of the BA 2012, the transmission source EDMG wireless station 1000 stands by for the duration of the SIFS after the completion of receiving the BA 2012, and re-transmits a packet including the MDPU that was not received correctly.

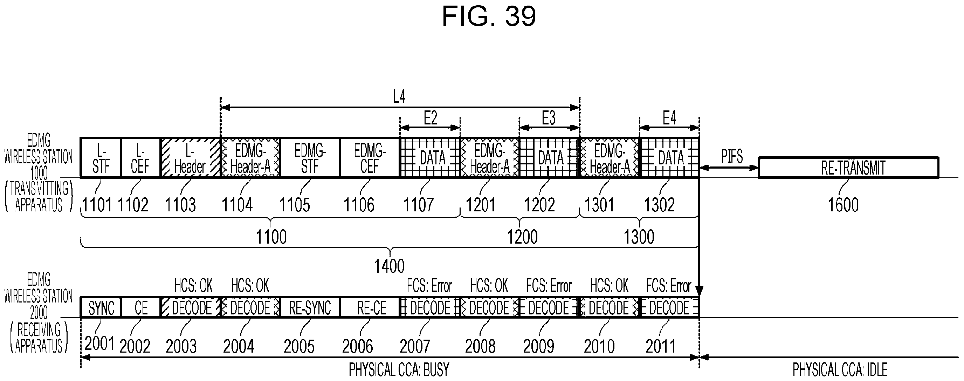

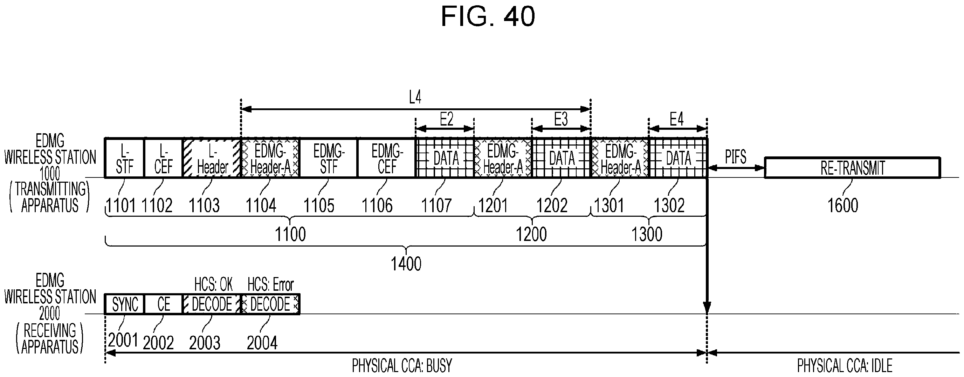

Note that in the case in which the destination EDMG wireless station 2000 detects an error by the FCS in all of the MPDUs obtained by the decoding processes 2007, 2009, and 2011 (see Fig. 39), or in the case of detecting an error by the HCS in the decoding 2004 (see Fig. 40), the destination EDMG wireless station 2000 does not transmit the BA 2012. In this case, the transmission source EDMG wireless station 1000 does not receive the BA 2012 within the PIFS time from the completion of transmitting the EDMG A-PPDU 1400, and therefore determines that the EDMG A-PPDU 1400 has not reached the destination EDMG wireless station 2000 correctly, and executes the re-transmission process 1600 of the EDMG A-PPDU 1400. These processes are the same as the processes of the destination EDMG wireless station 2000 in Figs. 19 and 20 of Embodiment 2.

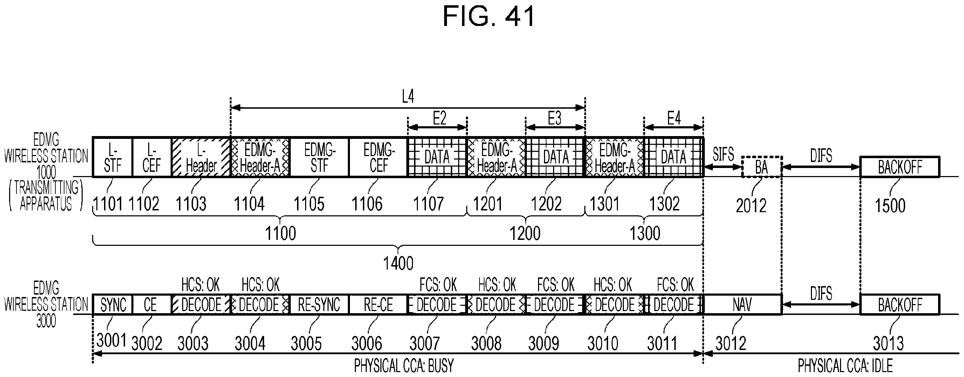

Fig. 41 is a diagram illustrating one example of fields transmitted by and processes executed by a transmission source EDMG wireless station 1000 and a non-destination EDMG wireless station 3000 in communication using EDMG A-PPDU according to Embodiment 4, and corresponds to Fig. 11 of Embodiment 1. Portions which are the same as Fig. 11 are denoted with the same signs, and description thereof is omitted.

In Fig. 11, after the virtual CCA that is busy for the duration of the nominal data field length L2 changes to idle, the non-destination EDMG wireless station 3000 sets the NAV 3012, and after the NAV 3012 ends, stands by for the duration of the DIFS, and starts the backoff control 3013. However, in Fig. 41, after the transmission of the third EDMG PPDU 1300 aggregated exceeding the nominal data field length L4 ends and the physical CCA changes from busy to idle, the non-destination EDMG wireless station 3000 sets the NAV 3012, and after the end of the NAV 3012, stands by for the duration of the DIFS, and starts the backoff control 3013. This operation is the same as the operation of the non-destination EDMG wireless station 3000 in Fig. 21 of Embodiment 2.

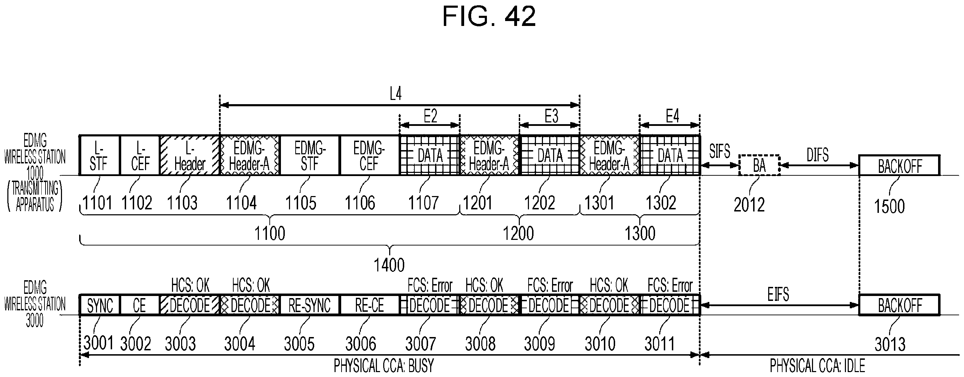

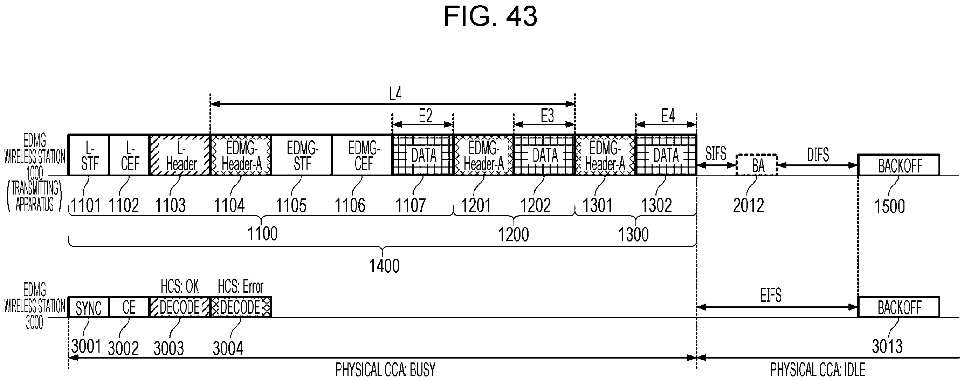

Note that in the case in which the non-destination EDMG wireless station 3000 detects an error by the FCS in all of the MPDUs obtained by the decoding processes 3007, 3009, and 3011 (see Fig. 42), or in the case of detecting an error by the HCS in the decoding 3004 (see Fig. 43), after the physical CCA changes from busy to idle, the non-destination EDMG wireless station 3000 stands by for the duration of the EIFS, and starts the backoff control 3013. These processes are the same as the processes of the non-destination EDMG wireless station 3000 in Figs. 22 and 23 of Embodiment 2.

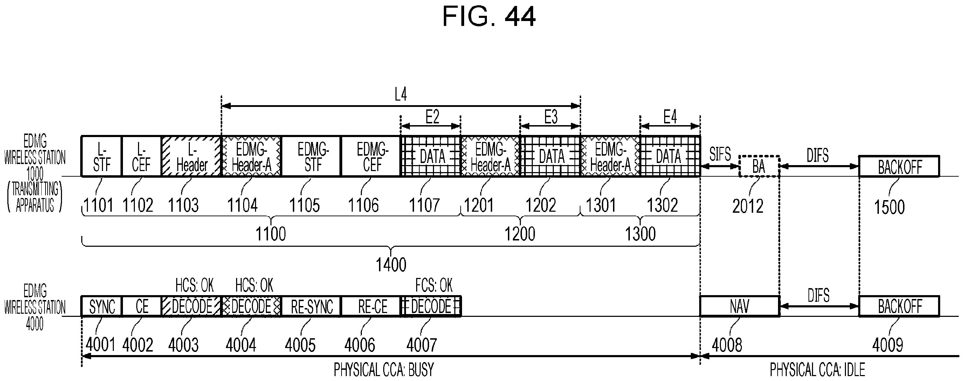

Fig. 44 is a diagram illustrating one example of fields transmitted by and processes executed by a transmission source EDMG wireless station 1000 and an EDMG A-PPDU non-supporting EDMG wireless station 4000 in communication using EDMG A-PPDU according to Embodiment 4, and corresponds to Fig. 14 of Embodiment 1. Portions which are the same as Fig. 14 are denoted with the same signs, and description thereof is omitted.

In Fig. 14, after the virtual CCA that is busy for the duration of the nominal data field length L2 changes to idle, the EDMG A-PPDU non-supporting EDMG wireless station 4000 sets the NAV 4008, and after the NAV 4008 ends, stands by for the duration of the DIFS, and starts the backoff control 4009. However, in Fig. 44, after the transmission of the third EDMG PPDU 1300 aggregated past the nominal data field length L4 ends and the physical CCA changes from busy to idle, the EDMG A-PPDU non-supporting EDMG wireless station 4000 sets the NAV 4008, and after the NAV 4008 ends, stands by for the duration of the DIFS, and starts the backoff control 4009. This operation is the same as the operation of the EDMG A-PPDU non-supporting EDMG wireless station 4000 in Fig. 24 of Embodiment 2.

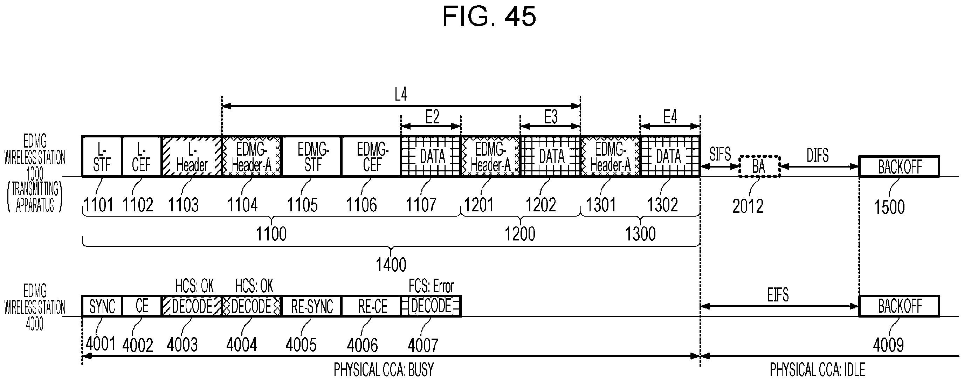

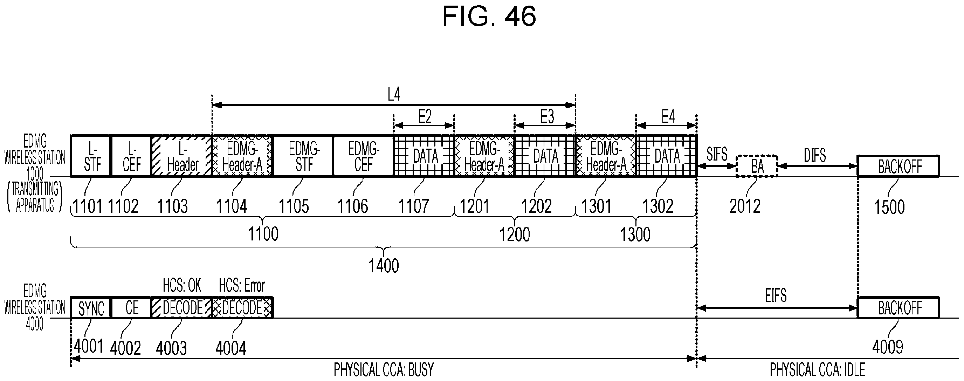

Note that in the case in which the EDMG A-PPDU non-supporting EDMG wireless station 4000 detects an error by the FCS in all of the MPDUs obtained by the decoding process 4007 (see Fig. 45), or in the case of detecting an error by the HCS in the decoding process 4004 (see Fig. 46), after the physical CCA changes from busy to idle, the EDMG A-PPDU non-supporting EDMG wireless station 4000 stands by for the duration of the EIFS, and starts the backoff control 4009. These operations are the same as the operations of the EDMG A-PPDU non-supporting EDMG wireless station 4000 in Figs. 25 and 26 of Embodiment 2.

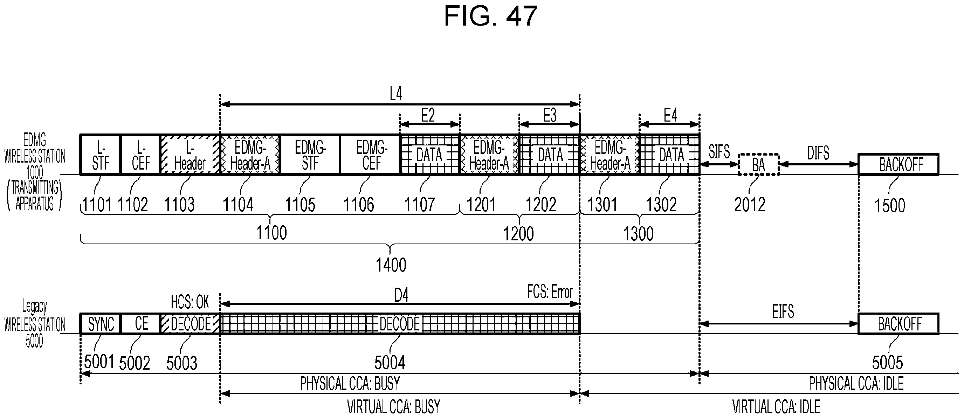

Fig. 47 is a diagram illustrating one example of fields transmitted/received by and processes executed by a transmission source EDMG wireless station 1000 and a legacy wireless station 5000 in communication using EDMG A-PPDU according to Embodiment 4, and corresponds to Fig. 17 of Embodiment 1. Portions which are the same as Fig. 17 are denoted with the same signs, and description thereof is omitted.

In Fig. 47, in the case in which an error is not detected by the HCS in the decoding process 5003, since the legacy wireless station 5000 is able to determine that the nominal data octet size is D4, the legacy wireless station 5000 sets the virtual CCA to busy and executes the decoding process 5004 treating from the EDMG-Header-A 1104 to the Data 1202 as the data field. Subsequently, similarly to Fig. 17, the legacy wireless station 5000 detects an error by the FCS in the decoding process 5004.

The legacy wireless station 5000 does not perform a decoding process on the EDMG-Header-A 1301 and the Data 1302, and sets the virtual CCA to idle. At this time, since the physical CCA is busy, the legacy wireless station 5000 determines that a wireless station not illustrated is using the wireless channel, and stands by to transmit.

After the physical CCA changes from busy to idle, the legacy wireless station 5000 stands by for the duration of the EIFS, and then starts the backoff control 5005.

By the above, according to Embodiment 4, after the completion of receiving the EDMG A-PPDU 1400, the destination EDMG wireless station 2000 is able to transmit the BA 2012 while moderating interruptions by other wireless stations, and the legacy wireless station 5000 is able to reduce power consumption.

### (Embodiment 5)

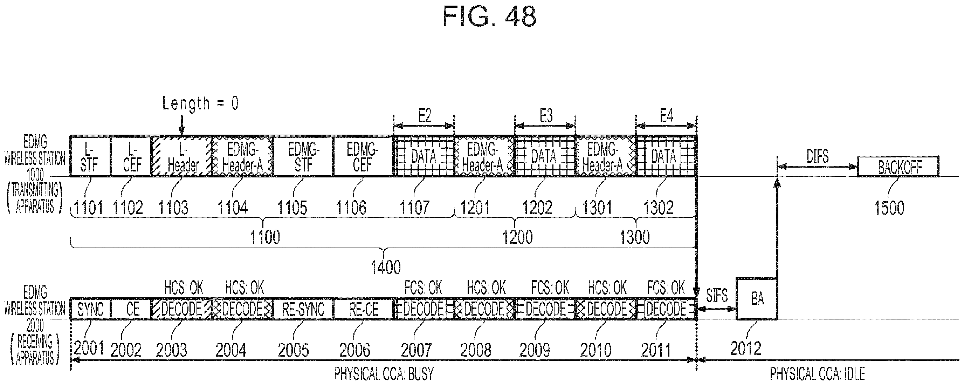

Fig. 48 is a diagram illustrating one example of fields transmitted/received by and processes executed by a transmission source EDMG wireless station 1000 and a destination EDMG wireless station 2000 in communication using EDMG A-PPDU according to Embodiment 5, and corresponds to Fig. 38 of Embodiment 4. Portions which are the same as Fig. 38 are denoted with the same signs, and description thereof is omitted.

In Fig. 38, the transmission source EDMG wireless station 1000 sets a nominal data field length L4 for a legacy wireless station from a data size known in advance before the transmission of the EDMG A-PPDU 1400, such as the data size accumulated in the buffer, for example, converts the nominal data field length L4 to the octet size D4 on the basis of a predetermined calculation method, sets the size in the Length field of the L-Header 1103. However, in Fig. 48, the transmission source EDMG wireless station 1000 sets the Length field of the L-Header 1103 to 0.

Other processes of the transmission source EDMG wireless station 1000 and the processes of the destination EDMG wireless station 2000 in Fig. 48 are the same as those in Fig. 38.

Note that, although not illustrated, in the case in which the BA 2012 indicates the existence of an MPDU that was not received correctly, or in the case in which an HCS error or an FCS error occurs in the decoding of the BA 2012, the transmission source EDMG wireless station 1000 stands by for the duration of the SIFS after the completion of receiving the BA 2012, and then executes re-transmission 1600 of a packet including the MPDU that was not received correctly, or stands by for the duration of the DIFS, and after performing the backoff control, re-transmits a packet including the MPDU that was not received correctly.

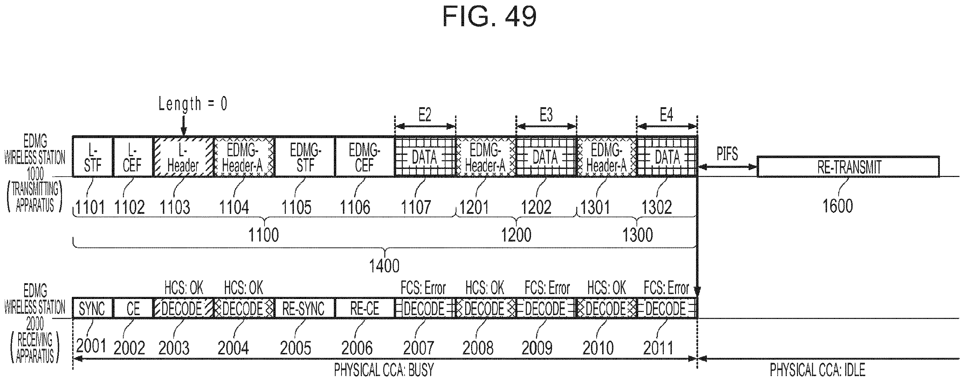

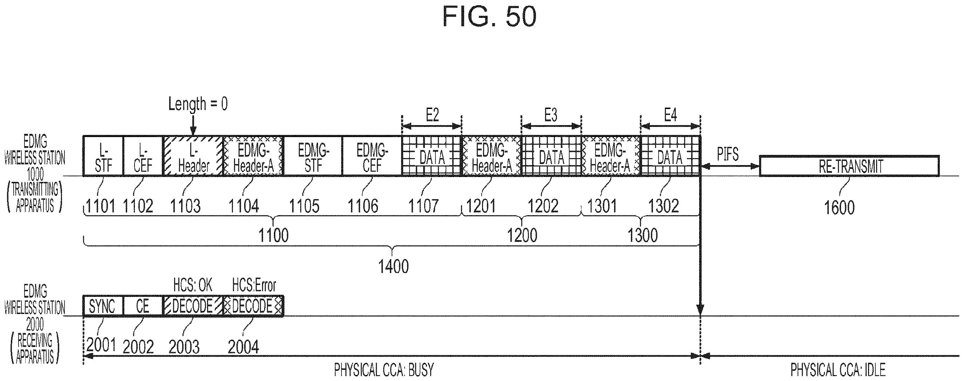

Note that in the case in which the destination EDMG wireless station 2000 detects an error by the FCS in all obtained by the decoding processes 2007, 2008, and 2011 (see Fig. 49), or in the case of detecting an error by the HCS in the decoding process 2004 (see Fig. 50), the destination EDMG wireless station 2000 does not transmit the BA 2012.

In this case, the transmission source EDMG wireless station 1000 does not receive the BA 2012 within the PIFS time from the completion of transmitting the EDMG A-PPDU 1400, and therefore determines that the EDMG A-PPDU 1400 has not reached the destination EDMG wireless station 2000 correctly, and executes the re-transmission process 1600 of the EDMG A-PPDU 1400. These processes are the same as the processes of the destination EDMG wireless station 2000 in Figs. 39 and 40 of Embodiment 4.

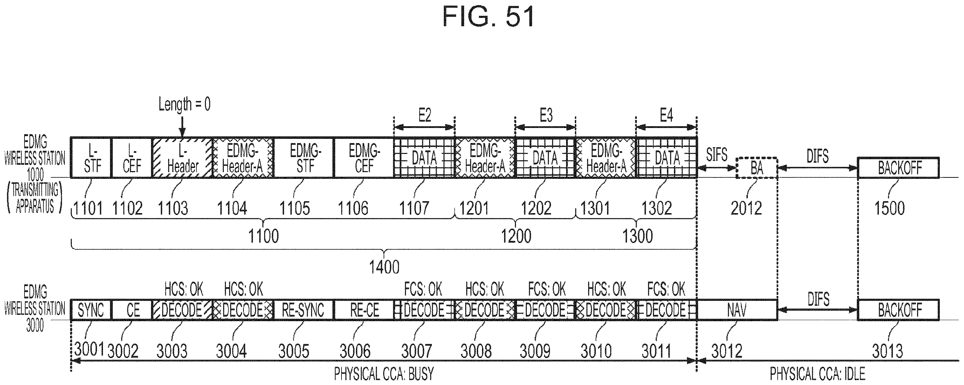

Fig. 51 is a diagram illustrating one example of fields transmitted/received by and processes executed by a transmission source EDMG wireless station 1000 and a non-destination EDMG wireless station 3000 in communication using EDMG A-PPDU according to Embodiment 5, and corresponds to Fig. 41 of Embodiment 4. Portions which are the same as Fig. 41 are denoted with the same signs, and description thereof is omitted.

In Fig. 51, similarly to Fig. 41, after the physical CCA changes from busy to idle, the non-destination EDMG wireless station 3000 sets the NAV 3012, and after the end of the NAV 3012, stands by for the duration of the DIFS, and starts the backoff control 3013.

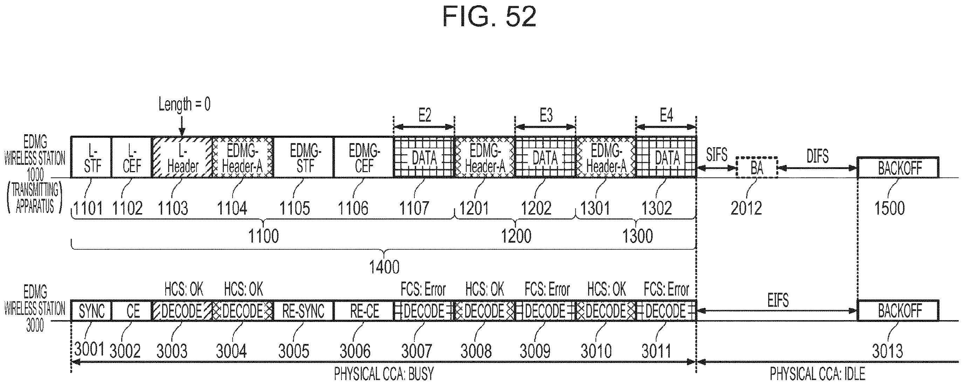

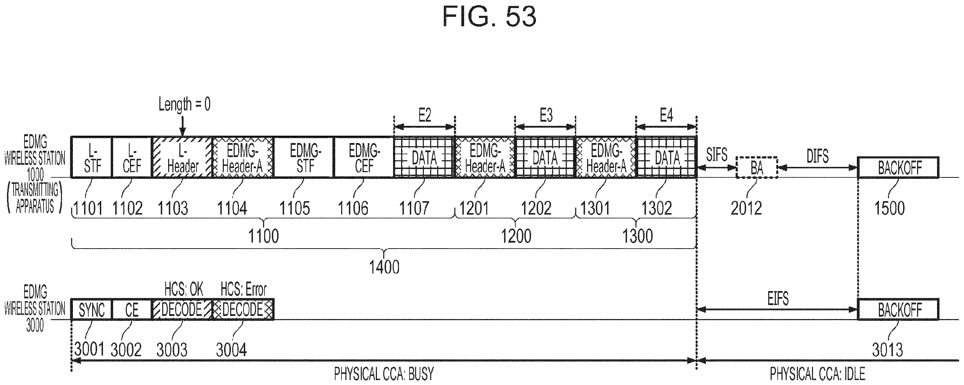

Note that in the case in which the non-destination EDMG wireless station 3000 detects an error by the FCS in all of the MPDUs obtained by the decoding processes 3007, 3009, and 3011 (see Fig. 52), or in the case of detecting an error by the HCS in the decoding 3004 (see Fig. 53), after the physical CCA changes from busy to idle, the non-destination EDMG wireless station 3000 stands by for the duration of the EIFS, and starts the backoff control 3013. These processes are the same as the processes of the non-destination EDMG wireless station 3000 in Figs. 42 and 43 of Embodiment 4.

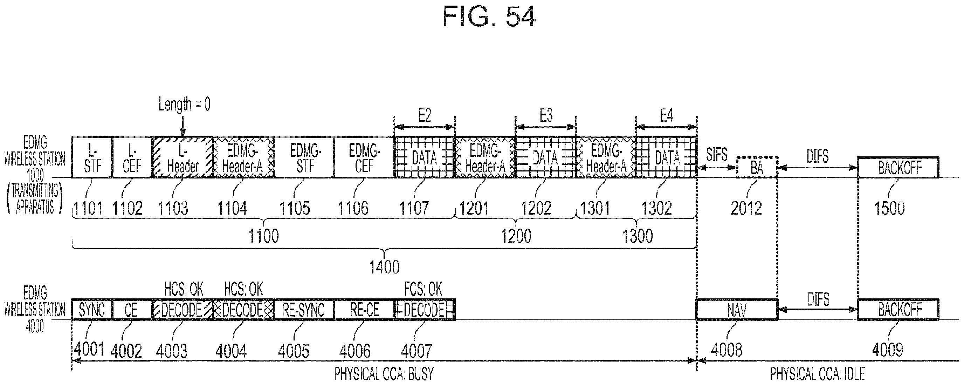

Fig. 54 is a diagram illustrating one example of fields transmitted/received by and processes executed by a transmission source EDMG wireless station 1000 and an EDMG A-PPDU non-supporting EDMG wireless station 4000 in communication using EDMG A-PPDU according to Embodiment 5, and corresponds to Fig. 44 of Embodiment 4. Portions which are the same as Fig. 44 are denoted with the same signs, and description thereof is omitted.

In Fig. 54, similarly to Fig. 44, after the physical CCA changes from busy to idle, the EDMG A-PPDU non-supporting EDMG wireless station 4000 sets the NAV 4008, and after the end of the NAV 4008, stands by for the duration of the DIFS, and starts the backoff control 4009.

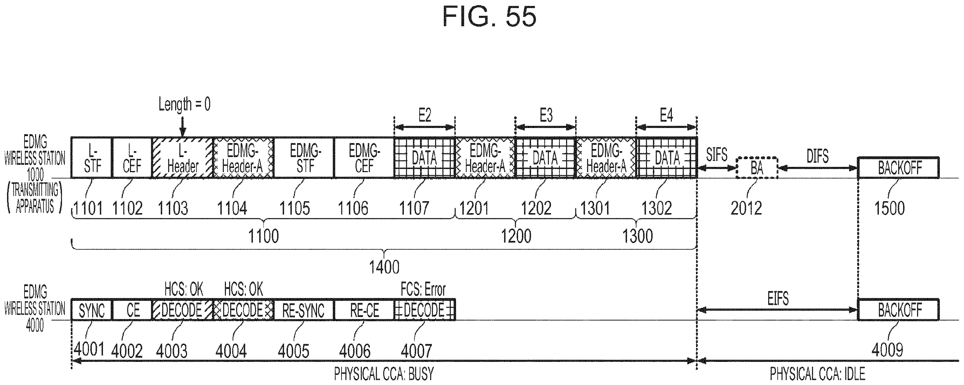

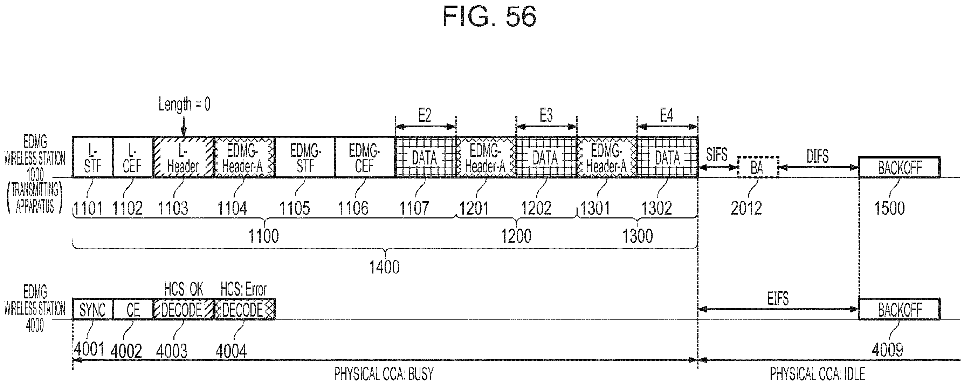

Note that in the case in which the EDMG A-PPDU non-supporting EDMG wireless station 4000 detects an error by the FCS in all of the MPDUs in the decoding 4007 (see Fig. 55), or in the case of detecting an error by the HCS in the decoding 4004 (see Fig. 56), after the physical CCA changes from busy to idle, the EDMG A-PPDU non-supporting EDMG wireless station 4000 stands by for the duration of the EIFS, and starts the backoff control 4009. These operations are the same as the operations of the EDMG A-PPDU non-supporting EDMG wireless station 4000 in Figs. 45 and 46 of Embodiment 4.

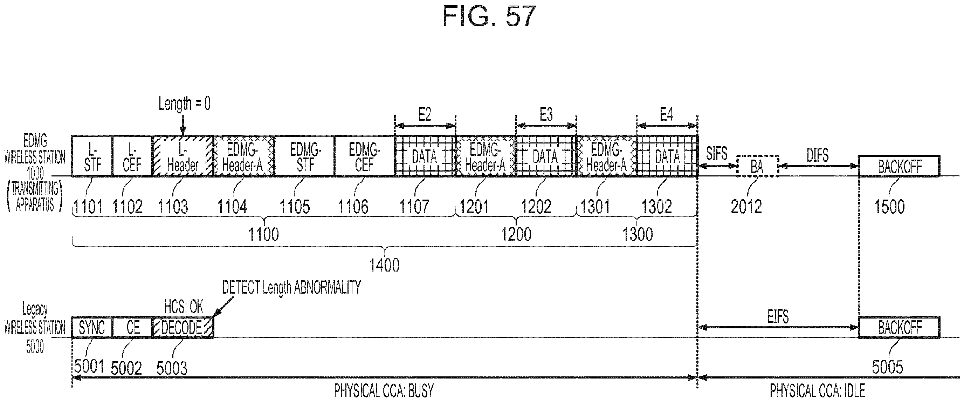

Fig. 57 is a diagram illustrating one example of fields transmitted/received by and processes executed by a transmission source EDMG wireless station 1000 and a legacy wireless station 5000 in communication using EDMG A-PPDU according to Embodiment 5, and corresponds to Fig. 47 of Embodiment 4. Portions which are the same as Fig. 47 are denoted with the same signs, and description thereof is omitted.

In Fig. 57, in the case in which an error is not detected by the HCS in the decoding process 5003, the legacy wireless station 5000 acquires "0" as the value of the Length field from the L-Header 1103.

However, in IEEE 802.11ad, since the Length field of the L-Header is prescribed to be set within a range from 1 to 262143, the legacy wireless station 5000 is able to determine that the Length setting is non-standard, and stop the decoding process of the fields from the EDMG-Header-A.

Similarly to Fig. 47, after the physical CCA changes from busy to idle, the legacy wireless station 5000 stands by for the duration of the EIFS and starts the backoff control 5005.

By the above, according to Embodiment 5, after the completion of receiving the EDMG A-PPDU 1400, the destination EDMG wireless station 2000 is able to transmit the BA 2012 while moderating interruptions by other wireless stations, and the legacy wireless station 5000 is able to reduce power consumption even further.

### (Embodiment 6)

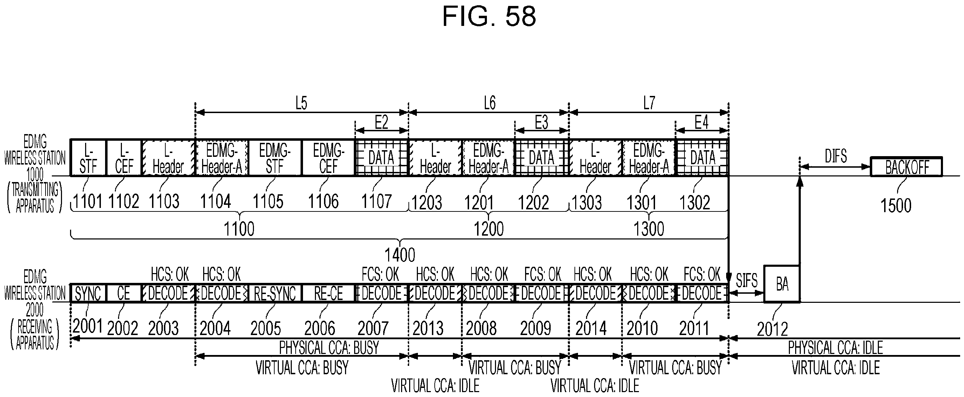

Fig. 58 is a diagram illustrating one example of fields transmitted/received by and processes executed by a transmission source EDMG wireless station 1000 and a destination EDMG wireless station 2000 in communication using EDMG A-PPDU according to Embodiment 6.

In Embodiment 6, the format of the EDMG A-PPDU 1400 is different from the format of the EDMG A-PPDU 1400 in Embodiment 1 to Embodiment 5.

Specifically, the second EDMG PPDU 1200 newly includes an L-Header 1203, and the third EDMG PPDU 1300 newly includes an L-Header 1303.

The transmission source EDMG wireless station 1000 executes the following process in the transmission of the EDMG A-PPDU 1400.

To inform a legacy wireless station of the nominal data octet size, the transmission source EDMG wireless station 1000 converts the combined field length L5 of the EDMG-Header-A 1104, the EDMG-STF 1105, the EDMG-CEF 1106, and the Data 1107 to a nominal data octet size D5 on the basis of a predetermined calculation method and sets the size in the Length field of the L-Header 1103, converts the combined field length L6 of the L-Header 1203, the EDMG-Header-A 1201, and the Data 1202 to a nominal data octet size D6 on the basis of a predetermined calculation method and sets the size in the Length field of the L-Header 1203, and converts the field length L7 on the wireless channel of the combined fields of the L-Header 1303, the EDMG-Header-A 1301, and the Data 1302 to a data octet size on the basis of a predetermined calculation method and sets the size in the Length field of the L-Header 1303.

The transmission source EDMG wireless station 1000 sets the octet size E2 of the Data 1107 in the Length field of the EDMG-Header-A 1104, sets the octet size E3 of the Data 1202 in the Length field of the EDMG-Header-A 1201, and sets the octet size E4 of the Data 1302 in the Length field of the EDMG-Header-A 1301.

The transmission source EDMG wireless station 1000 sets an EDMG Indication field to 1 in the L-Header 1003, the L-Header 1203, and the L-Header 1303 to indicate that the EDMG-Header-A exists in each EDMG PPDU forming the EDMG A-PPDU 1400.

To indicate that the first EDMG PPDU 1100, the second EDMG PPDU 1200, and the third EDMG PPDU 1300 are aggregated, the transmission source EDMG wireless station 1000 sets the Additional PPDU field to 1 in the L-Header 1103 and the L-Header 1203, and sets the Additional PPDU field to 0 in the L-Header 1303.

In Embodiment 6, since the Additional PPDU field in the existing L-Header is used to indicate that multiple EDMG PPDUs are aggregated, the Additional PPDU field does not have to exist in the EDMG-Header-A 1104, the EDMG-Header-A 1201, and the EDMG-Header-A 1301.

The destination EDMG wireless station 2000 executes the following process on the received EDMG A-PPDU 1400.

First, the destination EDMG wireless station 2000 uses the L-STF 1101 to execute a synchronization process 2001.

Next, the destination EDMG wireless station 2000 uses the L-CEF 1102 to execute the channel estimation (CE) process 2002. The destination EDMG wireless station 2000 is able to use the channel estimation result in a process of equalizing the fields from the L-Header 1103.

Next, the destination EDMG wireless station 2000 executes the decoding process 2003 of the L-Header 1103. In the decoding process 2003, in the case in which an error is not detected by the HCS, the destination EDMG wireless station 2000 recognizes that the EDMG-Header-A 1104 exists in the first EDMG PPDU 1100, and recognizes that the second EDMG PPDU 1200 exists after the first EDMG PPDU 1100.

Next, the destination EDMG wireless station 2000 executes the decoding process 2004 of the EDMG-Header-A 1104. In the decoding process 2004, in the case in which an error is not detected by the HCS, the destination EDMG wireless station 2000 recognizes that the size of the Data 1107 is E2 octets.

Next, the destination EDMG wireless station 2000 uses the EDMG-STF 1105 to execute the re-synchronization process 2005.

Next, the destination EDMG wireless station 2000 uses the EDMG-CEF 1106 to execute the channel re-estimation (re-CE) process 2006.

Next, the destination EDMG wireless station 2000 executes the decoding process 2007 of the Data 1107 in accordance with the set value (E2) of the Length field of the EDMG-Header-A 1104.

Next, because the destination EDMG wireless station 2000 recognizes the existence of the second EDMG PPDU 1200 from the result of the decoding process 2003, the destination EDMG wireless station 2000 executes a decoding process 2013 of the L-Header 1203. In the decoding process 2013, in the case in which an error is not detected by the HCS, the destination EDMG wireless station 2000 recognizes that the EDMG-Header-A 1201 exists in the second EDMG PPDU 1200, and recognizes that the third EDMG PPDU 1300 follows after the second EDMG PPDU 1200.

Next, the destination EDMG wireless station 2000 executes the decoding process 2008 of the EDMG-Header-A 1201. In the decoding process 2008, in the case in which an error is not detected by the HCS, the destination EDMG wireless station 2000 recognizes that the size of the Data 1202 is E3 octets.

Next, the destination EDMG wireless station 2000 executes a decoding process 2009 of the Data 1202 in accordance with the set value (E3) of the Length field of the EDMG-Header-A 1201.

Next, because the destination EDMG wireless station 2000 recognizes the existence of the third EDMG PPDU 1300 from the result of the decoding process 2013, the destination EDMG wireless station 2000 executes a decoding process 2014 of the L-Header 1303. In the decoding process 2014, in the case in which an error is not detected by the HCS, the destination EDMG wireless station 2000 recognizes that the EDMG-Header-A 1301 exists in the third EDMG PPDU 1300, and recognizes that an additional EDMG PPDU does not exist after the third EDMG PPDU 1300.

Next, the destination EDMG wireless station 2000 executes the decoding process 2010 of the EDMG-Header-A 1301. In the decoding process 2010, in the case in which an error is not detected by the HCS, the destination EDMG wireless station 2000 recognizes that the size of the Data 1302 is E4 octets.

Next, the destination EDMG wireless station 2000 executes the decoding process 2011 of the Data 1302 in accordance with the set value (E4) of the Length field of the EDMG-Header-A 1301.

Next, in the case in which an FCS error is not detected in one or more of the MPDUs obtained by the decoding processes 1107, 1202, and 1302, after the physical CCA changes from busy to idle, or after the virtual CCA with respect to the third EDMG PPDU 1300 positioned at the tail end changes from busy to idle, the destination EDMG wireless station 2000 stands by for the duration of the SIFS, and transmits the BA 2012 to the transmission source EDMG wireless station 1000.

After the BA 2012 is received correctly, to transmit the next packet, the transmission source EDMG wireless station 1000 stands by for the duration of the DIFS, and starts a backoff control 1500, or stands by for the duration of the DIFS, and after performing the backoff control, re-transmits an MPDU that was not received correctly.

Note that, although not illustrated, in the case in which the BA 2012 indicates the existence of an MPDU that was not received correctly, or in the case in which an HCS error or an FCS error occurs in the decoding of the BA 2012, the transmission source EDMG wireless station 1000 stands by for the duration of the SIFS after the completion of receiving the BA 2012, and executes the re-transmission process 1600 of a packet including the MDPU that was not received correctly.

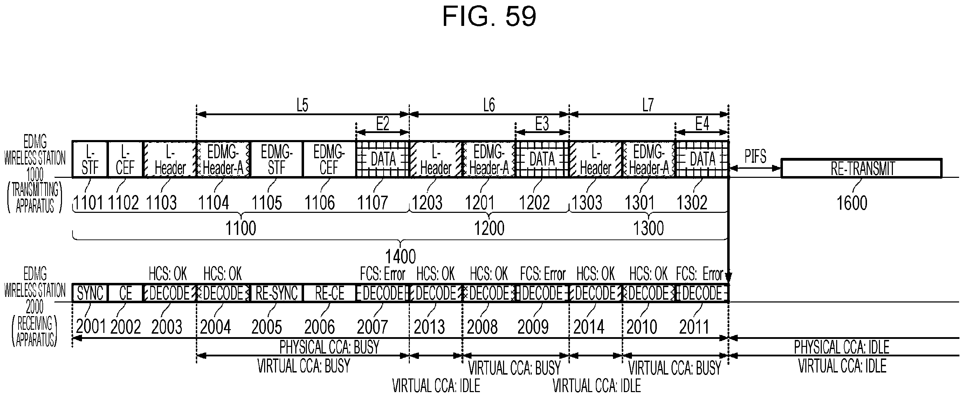

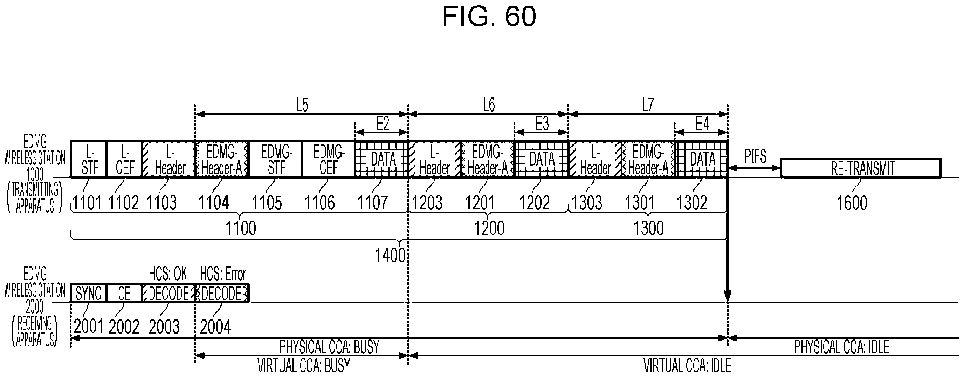

Note that in the case in which the destination EDMG wireless station 2000 detects an error by the FCS in all of the MPDUs obtained by the decoding processes 2007, 2009, and 2011 (see Fig. 59), or in the case of detecting an error by the HCS in the decoding process 2004 (see Fig. 60), the destination EDMG wireless station 2000 does not transmit the BA 2012. In this case, the transmission source EDMG wireless station 1000 does not receive the BA 2012 within the PIFS time from the completion of transmitting the EDMG A-PPDU 1400, and therefore determines that the EDMG A-PPDU 1400 has not reached the destination EDMG wireless station 2000 correctly, and executes the re-transmission process 1600 of the EDMG A-PPDU 1400.

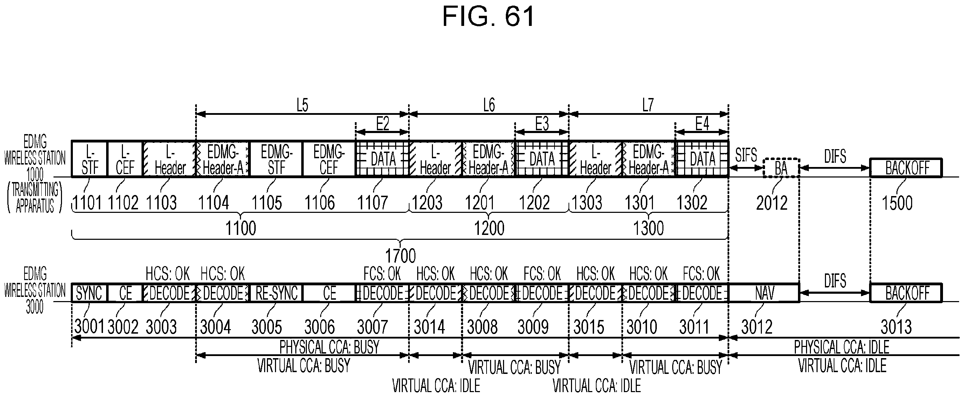

Fig. 61 is a diagram illustrating one example of fields transmitted/received by and processes executed by a transmission source EDMG wireless station 1000 and a non-destination EDMG wireless station 3000 in communication using EDMG A-PPDU according to Embodiment 6. The transmission source EDMG wireless station 1000 of Fig. 61 transmits the EDMG A-PPDU 1700 to the destination EDMG wireless station 2000 of Fig. 58 and correctly receives the BA 2012, while the non-destination EDMG wireless station 3000 of Fig. 61 is not a destination station of the EDMG A-PPDU 1700, but exists in an environment where the EDMG A-PPDU 1700 is receivable.

The non-destination EDMG wireless station 3000 of Fig. 61 executes a process similar to the destination EDMG wireless station 2000 of Fig. 58 on the received EDMG A-PPDU 1700, but the processing after the decoding process 3011 is different from the destination EDMG wireless station 2000 of Fig. 58. Specifically, in the case in which an error is not detected by the FCS in one or more of the MPDUs obtained by the decoding processes 3007, 3009, and 3011, the non-destination EDMG wireless station 3000 of Fig. 61 recognizes that the destination of the EDMG A-PPDU 1700 is not the non-destination EDMG wireless station 3000 itself, and after the physical CCA changes from busy to idle, or after the virtual CCA with respect to the third EDMG PPDU 1300 changes from busy to idle, sets a NAV 3012, and after the end of the NAV 3012, stands by for the duration of the DIFS, and starts the backoff control 3013.

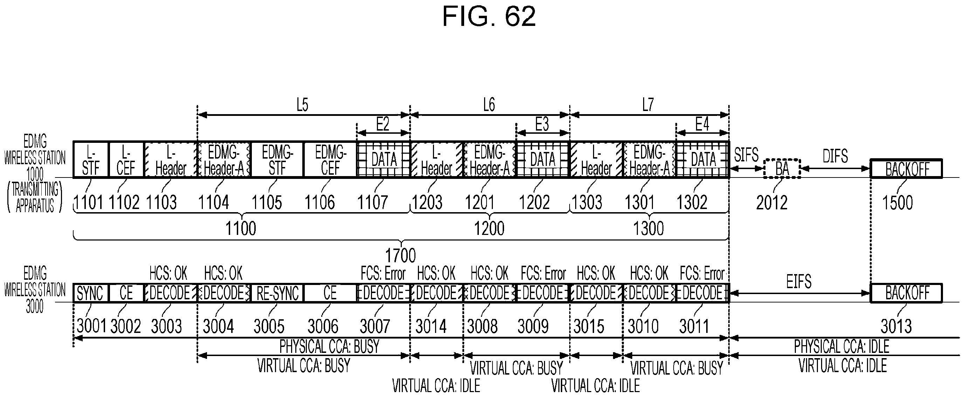

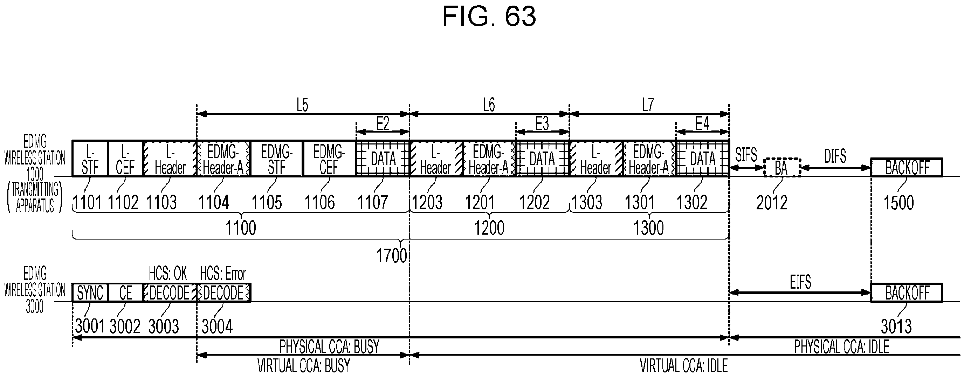

Note that in the case in which the non-destination EDMG wireless station 3000 detects an error by the FCS in all of the MPDUs obtained by the decoding processes 3007, 3009, and 3011 (see Fig. 62), or in the case of detecting an error by the HCS in the decoding process 3004 (see Fig. 63), after the physical CCA changes from busy to idle, the non-destination EDMG wireless station 3000 stands by for the duration of the EIFS, and starts the backoff control 3013.

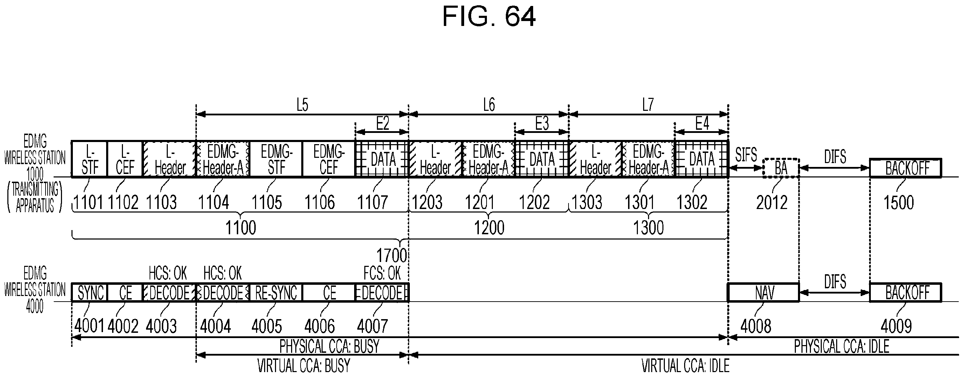

Fig. 64 is a diagram illustrating one example of fields transmitted/received by and processes executed by a transmission source EDMG wireless station 1000 and an EDMG A-PPDU non-supporting EDMG wireless station 4000 in communication using EDMG A-PPDU according to Embodiment 6. The transmission source EDMG wireless station 1000 of Fig. 64 transmits the EDMG A-PPDU 1700 to the destination EDMG wireless station 2000 of Fig. 58 and correctly receives the BA 2012, while the EDMG A-PPDU non-supporting EDMG wireless station 4000 of Fig. 64 is not a destination station of the EDMG A-PPDU 1700, but exists in an environment where the EDMG A-PPDU 1700 is receivable.

The EDMG A-PPDU non-supporting EDMG wireless station 4000 does not support the EDMG A-PPDU, and therefore executes a decoding process up to the Data 1107, and does not execute a decoding process on the fields from the L-Header 1203. In the case in which an error is not detected by the FCS in the decoding process 4007, the EDMG A-PPDU non-supporting EDMG wireless station 4000 recognizes that the destination of the EDMG A-PPDU 1400 is not the EDMG A-PPDU non-supporting EDMG wireless station 4000, sets the NAV 4008 after the physical CCA changes from busy to idle, and after the NAV 4008 ends, stands by for the duration of the DIFS, and starts the backoff control 4009.

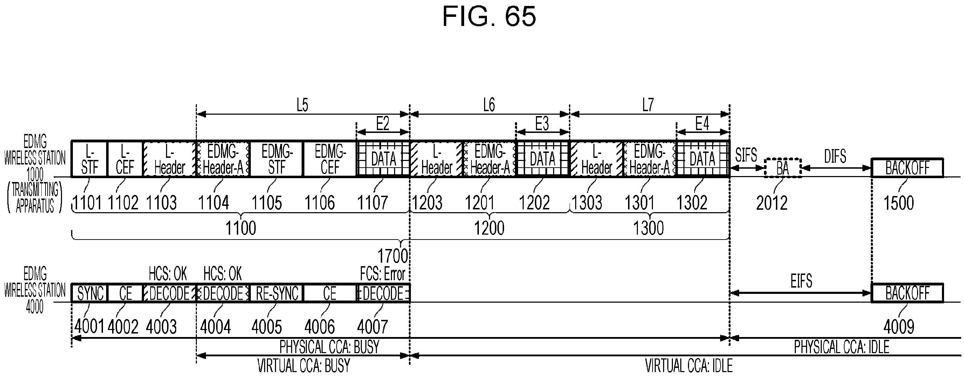

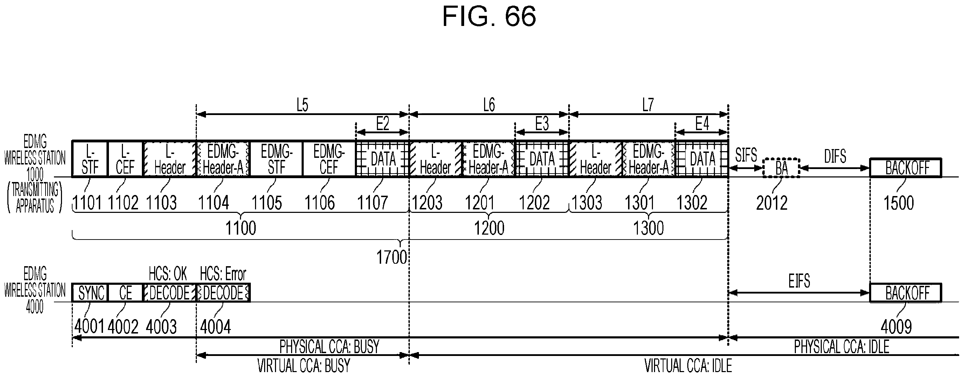

Note that in the case in which the EDMG A-PPDU non-supporting EDMG wireless station 4000 detects an error by the FCS in all of the MPDUs obtained by the decoding process 4007 (see Fig. 65), or in the case of detecting an error by the HCS in the decoding process 4004 (see Fig. 66), after the physical CCA changes from busy to idle, the EDMG A-PPDU non-supporting EDMG wireless station 4000 stands by for the duration of the EIFS, and starts the backoff control 4009.

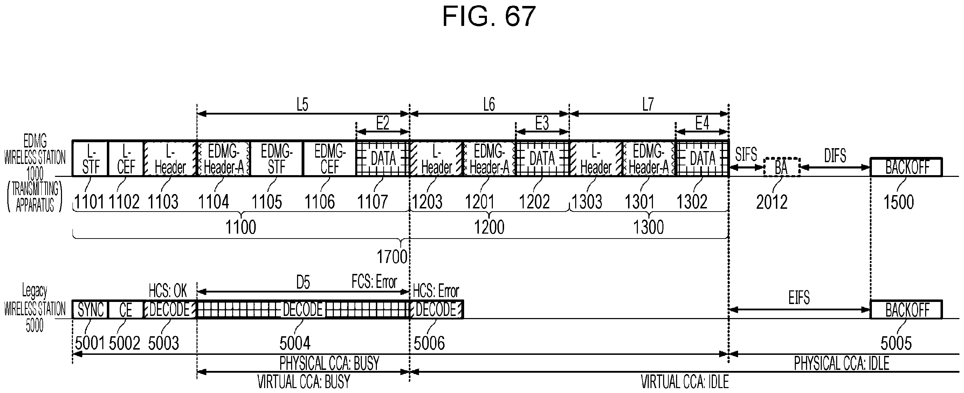

Fig. 67 is a diagram illustrating one example of fields transmitted/received by and processes executed by a transmission source EDMG wireless station 1000 and a legacy wireless station 5000 in communication using EDMG A-PPDU according to Embodiment 6. The transmission source EDMG wireless station 1000 of Fig. 67 transmits the EDMG A-PPDU 1700 to the destination EDMG wireless station 2000 of Fig. 58 and correctly receives the BA 2012, while the legacy wireless station 5000 is not a destination station of the EDMG A-PPDU 1700, but exists in an environment where the EDMG A-PPDU 1700 is receivable.

The legacy wireless station 5000 does not support the EDMG A-PPDU, and therefore processes the received EDMG A-PPDU 1700 as a typical legacy A-PPDU. In other words, the legacy wireless station 5000 executes the synchronization process 5001 and channel estimation (CE) 5002, followed by the decoding 5003 of the L-Header 1103. In the decoding 5003, in the case in which an error is not detected by the HCS, since the Additional PPDU field is set to 1, the legacy wireless station 5000 understands that the second EDMG PPDU 1200 follows immediately after the first EDMG PPDU 1100. Also, from the Length field of the L-Header 1103, the legacy wireless station is able to learn the octet size D5 of the nominal data field of the first EDMG PPDU 1100.

Subsequently, the legacy wireless station 5000 executes the decoding process 5004 treating the fields from the EDMG-Header-A 1104 to the Data 1107 as a data field of the size D5 octets. In the decoding process 5004, the legacy wireless station 5000 detects an error by the FCS.

Also, since the EDMG-STF 1105, the EDMG-CEF 1106, and the Data 1107 are sometimes transmitted using channel bonding technology or MIMO technology, there is a possibility that the legacy wireless station 5000 may lose synchronization in the middle of the decoding process 5004.

The legacy wireless station 5000 recognizes the existence of the second EDMG PPDU 1200 from the result of the decoding process 5003, and therefore executes a decoding process 5006 of the L-Header 1203. However, as described earlier, since the legacy wireless station 5000 sometimes loses synchronization in the middle of the decoding process 5004, there is a high probability of detecting an error by the HCS in the decoding process 5006.

In the case in which an error is detected by the HCS in the decoding process 5006, the legacy wireless station 5000 does not execute the decoding process on the fields from the EDMG-Header-A 1201. After the physical CCA changes from busy to idle, the legacy wireless station 5000 stands by for the duration of the EIFS and starts the backoff control 5005.

According to Embodiment 6, after the completion of receiving the EDMG A-PPDU 1400, the destination EDMG wireless station 2000 is able to transmit the BA 2012 while moderating interruptions by other wireless stations, and the legacy wireless station 5000 is able to reduce power consumption. Also, the backoff control start timings of an EDMG wireless station and a legacy wireless station may be aligned, and a transmit opportunity may be given uniformly to each wireless station.

### (Configuration of EDMG wireless station)

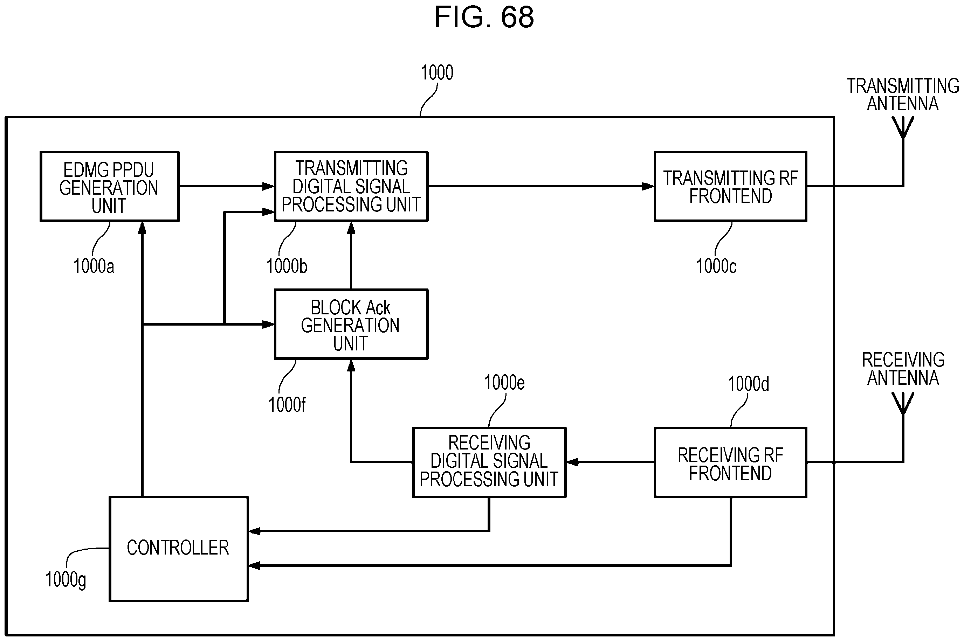

Fig. 68 is a diagram illustrating an example of the configuration of an EDMG wireless station according to the present disclosure. In the present disclosure, the EDMG wireless station 1000, the EDMG wireless station 2000, the EDMG wireless station 3000, and the EDMG wireless station 4000 have the same configuration.

In Fig. 68, the EDMG wireless station 1000 is provided with an EDMG PPDU generation unit 1000a, a transmitting digital signal processing unit 1000b, a transmitting RF frontend 1000c, a receiving RF frontend 1000d, a receiving digital signal processing unit 1000e, a block Ack generation unit 1000f, and a controller 1000g.

The EDMG PPDU generation unit 1000a generates each EDMG PPDU forming the EDMG A-PPDU.

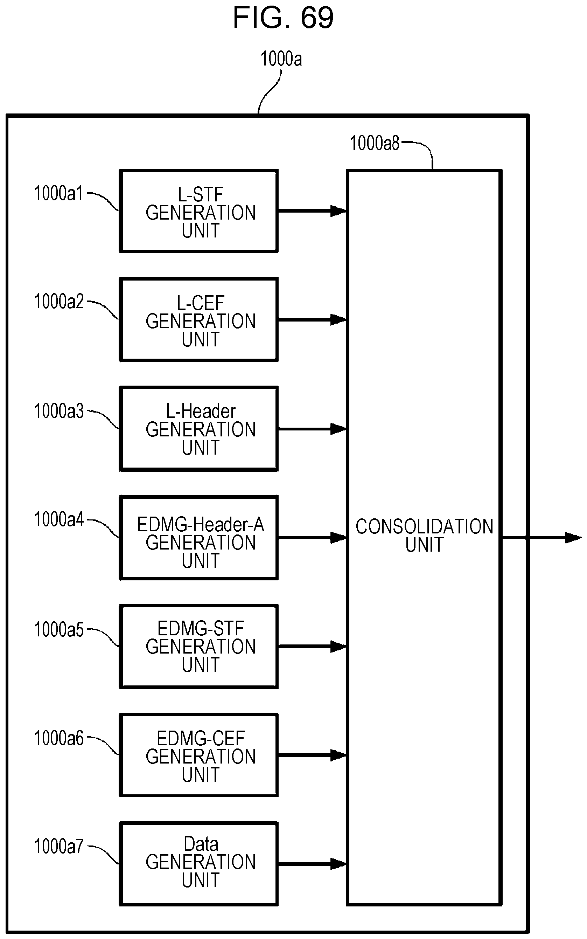

As illustrated in Fig. 69, the EDMG PPDU generation unit 1000a is provided with an L-STF generation unit 1000a1, an L-CEF generation unit 1000a2, an L-Header generation unit 1000a3, an EDMG-Header-A generation unit 1000a4, an EDMG-STF generation unit 1000a5, an EDMG-CEF generation unit 1000a6, a Data generation unit 1000a7, and a consolidation unit 1000a8.

The L-STF generation unit 1000a1 generates the L-STF with which legacy wireless stations and EDMG wireless stations execute packet detection, the synchronization process, automatic gain control (AGC), and the like.

The L-CEF generation unit 1000a2 generates the L-CEF with which legacy wireless stations and EDMG wireless stations execute channel estimation.

The L-Header generation unit 1000a3 calculates the nominal data octet size for legacy wireless stations, and sets the calculation result in the Length field of the L-Header. Also, the L-Header generation unit 1000a3 sets the EDMG Indication field of the L-Header to 1. Also, the L-Header generation unit 1000a3 sets the Additional PPDU field of the L-Header according to the presence or absence of a subsequent EDMG PPDU.

The EDMG-Header-A generation unit 1000a4 sets the octet size of the actual data field in the Length field of the EDMG-Header-A. Also, the EDMG-Header-A generation unit 1000a4 sets the Additional PPDU field of the EDMG-Header-A according to the presence or absence of a subsequent EDMG PPDU.

When transmitting a packet using MIMO technology or channel bonding technology, the EDMG-STF generation unit 1000a5 generates the EDMG-STF with which EDMG wireless stations execute the re-synchronization process with respect to each MIMO stream or a channel-bonded broadband signal.

When transmitting a packet using MIMO technology or channel bonding technology, the EDMG-CEF generation unit 1000a6 generates the EDMG-CEF with which EDMG wireless stations execute the channel re-estimation process with respect to each MIMO stream or a channel-bonded broadband signal.

The Data generation unit 1000a7 generates payload data.

The consolidation unit 1000a8 consolidates the L-STF, L-CEF, L-Header, EDMG-Header-A, EDMG-STF, EDMG-CEF, and payload data on the basis of the settings in the Additional PPDU field of the L-Header and the Additional PPDU field of the EDMG-Header-A, and forms the EDMG A-PPDU.

The transmitting digital signal processing unit 1000b is a block that executes an aggregation process on multiple EDMG PPDUs in accordance with the set value in the Additional PPDU field of the L-Header or the Additional PPDU field of the EDMG-Header-A.

The transmitting RF frontend 1000c frequency-converts an input signal to an RF signal, and emits the RF signal from a transmitting antenna.

The receiving RF frontend 1000d receives a signal transmitted from another wireless station with a receiving antenna, and frequency-converts the received RF signal to a baseband signal. Also, the power of the received signal is measured, and the measurement value is sent to the controller 1000g.

The receiving digital signal processing unit 1000e executes a synchronization process, a channel estimation process, a header decoding process, and a data decoding process on the received signal. In the case in which the L-Header is received correctly, the receiving digital signal processing unit 1000e computes the nominal data field length on the wireless channel from the set value of the Length field, and outputs to the controller 1000g.

Also, the receiving digital signal processing unit 1000e outputs the L-Header HCS check result, the EDMG-Header-A HCS check result, the FCS check results for the multiple MPDUs forming the data field, and the Duration field value and destination address field value in the MAC header included in the data field to the controller 1000g. Additionally, the receiving digital signal processing unit outputs the HCS check results and the FCS check results to the block Ack generation unit 1000f.

The block Ack generation unit 1000f generates a block Ack frame on the basis of the HCS check results and the FCS check results.

The controller 1000g controls the operation of the EDMG wireless station 1000. The controller 1000g counts various IFS times and the time of the nominal data field length. In the case in which the EDMG wireless station 1000 operates as a transmitting device, if a block Ack is received correctly, the controller 1000g causes the EDMG wireless station 1000 to execute a backoff process or a re-transmission process depending on the content of the block Ack, whereas if a block Ack is not received correctly, the controller 1000g causes the wireless station to execute the re-transmission process.

Also, in the case in which the received frame is addressed to the wireless station itself, the controller 1000g sets the physical CCA on the basis of the received signal power level, sets the virtual CCA on the basis of the Length field of the L-Header, and causes the EDMG wireless station 1000 to execute a block Ack transmission process.

Also, in the case in which the received frame is not addressed to the wireless station itself, the controller 1000g sets the NAV and stops the transmission processes of the wireless station 1000 during the NAV period, or counts a predetermined IFS time, and causes the wireless station 1000 to execute a backoff control.

In each embodiment above, the present disclosure is suited to transmitting and receiving a moving image (movie), a still image (picture), sound (audio), text data, and control data using a wireless communication device, such as a smartphone, cellular phone, tablet, PC, or TV, for example.

The above describes various embodiments with reference to the drawings. However, the present disclosure obviously is not limited to such examples. It is clear to persons skilled in the art that various modifications or alterations may occur insofar as they are within the scope stated in the claims, and it is to be understood that such modifications or alterations obviously belong to the technical scope of the present disclosure.

In each of the embodiments above, the present disclosure is described by taking an example of using hardware, but it is also possible to realize the present disclosure with software working in cooperation with hardware.

In addition, each function block used in the description of each of the embodiments above typically is realized by an LSI chip, that is, an integrated circuit including one or more input terminals and one or more output terminals. The function blocks may be realized individually as separate chips, or as a single chip that includes some or all function blocks. Although LSI is discussed herein, the circuit integration methodology may also be referred to as IC, system LSI, super LSI, or ultra LSI, depending on the degree of integration.

Furthermore, the circuit integration methodology is not limited to LSI, and may be also be realized by using special-purpose circuits or general-purpose processors. A field-programmable gate array (FPGA) capable of being programmed after fabrication of the LSI chip, or a reconfigurable processor whose circuit cell connections and settings inside the LSI chip may be reconfigured, may also be used.

Furthermore, if circuit integration technology that may be substituted for LSI appears as a result of progress in semiconductor technology or another derived technology, obviously the new technology may be used to integrate the function blocks. Biotechnology applications and the like are also a possibility.

### Industrial Applicability

The present disclosure may be applied to a method of forming and transmitting aggregate physical layer convergence protocol data units (PPDUs).

### Reference Signs List

- 1000: EDMG wireless station
- 1000a: EDMG PPDU generation unit
- 1000a1: L-STF generation unit
- 1000a2: L-CEF generation unit
- 1000a3: L-Header generation unit
- 1000a4: EDMG-Header-A generation unit
- 1000a5: EDMG-STF generation unit
- 1000a6: EDMG-CEF generation unit
- 1000a7: Data generation unit
- 1000a8: consolidation unit
- 1000b: transmitting digital signal processing unit
- 1000c: transmitting RF frontend
- 1000d: receiving RF frontend
- 1000e: receiving digital signal processing unit
- 1000f: block Ack generation unit
- 1000g: controller

## Claims

1. A communication apparatus (1000,9000) supporting communication over a legacy WiGig and over an enhanced directional multi-gigabit, EDMG, the communication apparatus comprising:
a PPDU generation unit (1000a) configured to, with respect to an aggregate physical layer convergence protocol data unit, A-PPDU, including a legacy STF, a legacy CEF, a legacy header field, a non-legacy STF, a non-legacy CEF, multiple non-legacy header fields, and multiple data fields, set a nominal data octet size computed on a basis of a nominal data field length in the legacy header field, and set a first Additional PPDU field included in the legacy header field to 0;
a signal processing unit (1000b) configured to form the A-PPDU in the nominal data field length or less; and
a transmission unit (1000c)configured to transmit the formed A-PPDU, a reception unit (1000d) configured to receive an Ack frame in response to the transmitted
A-PPDU, wherein each of the multiple non-legacy header fields indicates the length of a corresponding one of the multiple data fields; wherein each of the multiple non-legacy header fields comprises another Additional PPDU field indicating the presence or absence of a subsequent non-legacy header field and a data field; and wherein
the nominal data field length is a time equal to or greater than a total of the non-legacy STF, the non-legacy CEF, the multiple non-legacy header fields, and the multiple data fields.

2. A communication apparatus (2000, 9100) supporting communication over a legacy WiGig and over an enhanced directional multi-gigabit, EDMG, the communication apparatus comprising:
a reception unit (1000d) configured to, with respect to an aggregate physical layer convergence protocol data unit, A-PPDU, including a legacy STF, a legacy CEF, a legacy header field, a non-legacy STF, a non-legacy CEF, multiple non-legacy header fields, and multiple data fields, receive the A-PPDU formed in a nominal data field length or less in which a nominal data octet size computed on a basis of the nominal data field length is set in the legacy header field and a first Additional PPDU field included in the legacy header field is set to 0; and
a transmission unit (1000c) configured to transmit an Ack frame in response to the received A-PPDU, wherein each of the multiple non-legacy header fields indicates the length of a corresponding one of the multiple data fields;
wherein each of the multiple non-legacy header fields comprises another Additional PPDU field indicating the presence or absence of a subsequent non-legacy header field and a data field;
and wherein
the nominal data field length is a time equal to or greater than a total of the non-legacy STF, the non-legacy CEF, the multiple non-legacy header fields, and the multiple data fields.

3. A communication method performed by a communication apparatus (1000, 9000) supporting communication over a legacy WiGig and over an
enhanced directional multi-gigabit, EDMG, the method comprising:
setting, with respect to an aggregate physical layer convergence protocol data unit, A-PPDU, including a legacy STF, a legacy CEF, a legacy header field, a non-legacy STF, a non-legacy CEF, multiple non-legacy header fields, and multiple data fields, a nominal data octet size computed on a basis of a nominal data field length in the legacy header field setting a first Additional PPDU field included in the legacy header field to 0;
forming the A-PPDU in the nominal data field length or less; and
transmitting the formed A-PPDU,
receiving an Ack frame in response to the transmitted A-PPDU, wherein each of the multiple non-legacy header fields indicates the length of a corresponding one of the multiple data fields;
wherein each of the multiple non-legacy header fields comprises another Additional PPDU field indicating the presence or absence of a subsequent non-legacy header field and a data field;
and wherein
the nominal data field length is a time equal to or greater than a total of the non-legacy STF, the non-legacy CEF, the multiple non-legacy header fields, and the multiple data fields.

4. A communication method performed by a communication apparatus (2000,9100) supporting communication over a legacy WiGig and over an
enhanced directional multi-gigabit, EDMG, the method comprising:
receiving, with respect to an aggregate physical layer convergence protocol data unit, A-PPDU, including a legacy STF, a legacy CEF, a legacy header field, a non-legacy STF, a non-legacy CEF, multiple non-legacy header fields, and multiple data fields, the A-PPDU formed in a nominal data field length or less in which a nominal data octet size computed on a basis of the nominal data field length is set in the legacy header field and a first Additional
PPDU field included in the legacy header field is set to 0; and
transmitting an Ack frame in response to the received A-PPDU, wherein each of the multiple non-legacy header fields indicates the length of a corresponding one of the multiple data fields;
wherein each of the multiple non-legacy header fields comprises another Additional PPDU field indicating the presence or absence of a subsequent non-legacy header field and a data field;
and wherein
the nominal data field length is a time equal to or greater than a total of the non-legacy STF, the non-legacy CEF, the multiple non-legacy header fields, and the multiple data fields.

## Patentansprüche

1. Eine Kommunikationsvorrichtung (1000, 9000), die Kommunikation über Legacy-WiGig und über enhanced directional multi-gigabit, EDMG, unterstützt, wobei die Kommunikationsvorrichtung umfasst:
eine PPDU-Erzeugungseinheit (1000a), die dazu eingerichtet ist, bezüglich einer Konvergenzprotokoll-Sammeldateneinheit der physikalischen Schicht (aggregate physical layer convergence protocol data unit, A-PPDU), welche ein Legacy-STF, ein Legacy-CEF, ein Legacy-Headerfeld, ein Nicht-Legacy-STF, ein Nicht-Legacy-CEF, mehrere Nicht-Legacy-Headerfelder, und mehrere Datenfelder beinhaltet, eine nominale Datenoktettgröße zu setzen, die basierend auf einer nominalen Datenfeldlänge in dem Legacy-Headerfeld berechnet wird, und
ein erstes Zusätzliches PPDU-Feld, das in dem Legacy-Headerfeld enthalten ist, auf 0 zu setzen;
eine Signalverarbeitungseinheit (1000b), die dazu eingerichtet ist, die A-PPDU mit der nominalen Datenfeldlänge oder weniger zu bilden; und
eine Übertragungseinheit (1000c), die dazu eingerichtet ist, die gebildete A-PPDU zu übertragen,
eine Empfangseinheit (1000d), die dazu eingerichtet ist, einen Ack-Rahmen als Antwort auf die übertragene A-PPDU zu empfangen, wobei jedes der mehreren Nicht-Legacy-Headerfelder die Länge eines entsprechenden der mehreren Datenfelder anzeigt;
wobei jedes der mehreren Nicht-Legacy-Headerfelder ein weiteres Zusätzliches PPDU-Feld umfasst, das die Anwesenheit oder Abwesenheit eines folgenden Nicht-Legacy-Headerfeldes und eines Datenfeldes anzeigt;
und wobei die nominale Datenfeldlänge eine Zeit ist, die gleich oder größer ist als eine Gesamtheit des Nicht-Legacy-STF, des Nicht-Legacy CEF, der mehreren Nicht-Legacy-Headerfelder und der mehreren Datenfelder.

2. Eine Kommunikationsvorrichtung (2000, 9100), die Kommunikation über Legacy-WiGig und über enhanced directional multi-gigabit, EDMG, unterstützt, wobei die Kommunikationsvorrichtung umfasst:
eine Empfangseinheit (1000d), die dazu eingerichtet ist, bezüglich einer Konvergenzprotokoll-Sammeldateneinheit der physikalischen Schicht (aggregate physical layer convergence protocol data unit, A-PPDU), welche ein Legacy-STF, ein Legacy-CEF, ein Legacy-Headerfeld, ein Nicht-Legacy-STF, ein Nicht-Legacy-CEF, mehrere Nicht-Legacy-Headerfelder, und mehrere Datenfelder beinhaltet, die A-PPDU zu empfangen, die mit einer nominalen Datenfeldlänge oder weniger gebildet ist und in der eine nominale Datenoktettgröße, die basierend auf einer nominalen Datenfeldlänge berechnet wird, in dem Legacy-Headerfeld gesetzt ist und ein erstes Zusätzliches PPDU-Feld, das in dem Legacy-Headerfeld enthalten ist, auf 0 gesetzt ist; und
eine Übertragungseinheit (1000c), die dazu eingerichtet ist, einen Ack-Rahmen als Antwort auf die empfangene A-PPDU zu übertragen, wobei jedes der mehreren Nicht-Legacy-Headerfelder die Länge eines entsprechenden der mehreren Datenfelder anzeigt;
wobei jedes der mehreren Nicht-Legacy-Headerfelder ein weiteres Zusätzliches PPDU-Feld umfasst, das die Anwesenheit oder Abwesenheit eines folgenden Nicht-Legacy-Headerfeldes und eines Datenfeldes anzeigt;
und wobei die nominale Datenfeldlänge eine Zeit ist, die gleich oder größer ist als eine Gesamtheit des Nicht-Legacy-STF, des Nicht-Legacy CEF, der mehreren Nicht-Legacy-Headerfelder und der mehreren Datenfelder.

3. Ein Kommunikationsverfahren, das von einer Kommunikationsvorrichtung (1000, 9000) durchgeführt wird, die Kommunikation über Legacy-WiGig und über enhanced directional multi-gigabit, EDMG, unterstützt, wobei das Verfahren umfasst:
Setzen, bezüglich einer a Konvergenzprotokoll-Sammeldateneinheit der physikalischen Schicht (aggregate physical layer convergence protocol data unit, A-PPDU), welche ein Legacy-STF, ein Legacy-CEF, ein Legacy-Headerfeld, ein Nicht-Legacy-STF, ein Nicht-Legacy-CEF, mehrere Nicht-Legacy-Headerfelder, und mehrere Datenfelder beinhaltet, einer nominalen Datenoktettgröße, die basierend auf einer nominalen Datenfeldlänge in dem Legacy-Headerfeld berechnet wird
Setzen eines ersten Zusätzliches PPDU-Feldes, das in dem Legacy-Headerfeld enthalten ist, auf 0;
Bilden der A-PPDU mit der nominalen Datenfeldlänge oder weniger; und
Übertragen der gebildeten A-PPDU,
Empfangen eines Ack-Rahmens als Antwort auf die übertragene A-PPDU, wobei jedes der mehreren Nicht-Legacy-Headerfelder die Länge eines entsprechenden der mehreren Datenfelder anzeigt;
wobei jedes der mehreren Nicht-Legacy-Headerfelder ein weiteres Zusätzliches PPDU-Feld umfasst, das die Anwesenheit oder Abwesenheit eines folgenden Nicht-Legacy-Headerfeldes und eines Datenfeldes anzeigt;
und wobei die nominale Datenfeldlänge eine Zeit ist, die gleich oder größer ist als eine Gesamtheit des Nicht-Legacy-STF, des Nicht-Legacy CEF, der mehreren Nicht-Legacy-Headerfelder und der mehreren Datenfelder.

4. Ein Kommunikationsverfahren, das von einer Kommunikationsvorrichtung (2000, 9100) durchgeführt wird, die Kommunikation über Legacy-WiGig und über enhanced directional multi-gigabit, EDMG, unterstützt, wobei das Verfahren umfasst:
Empfangen, bezüglich einer Konvergenzprotokoll-Sammeldateneinheit der physikalischen Schicht (aggregate physical layer convergence protocol data unit, A-PPDU), welche ein Legacy-STF, ein Legacy-CEF, ein Legacy-Headerfeld, ein Nicht-Legacy-STF, ein Nicht-Legacy-CEF, mehrere Nicht-Legacy-Headerfelder, und mehrere Datenfelder beinhaltet, derA-PPDU, die mit einer nominalen Datenfeldlänge oder weniger gebildet ist und in der eine nominale Datenoktettgröße, die basierend auf einer nominalen Datenfeldlänge berechnet wird, in dem Legacy-Headerfeld gesetzt ist und ein erstes Zusätzliches PPDU-Feld, das in dem Legacy-Headerfeld enthalten ist, auf 0 gesetzt ist; und
Übertragen eines Ack-Rahmens als Antwort auf die empfangene A-PPDU, wobei jedes der mehreren Nicht-Legacy-Headerfelder die Länge eines entsprechenden der mehreren Datenfelder anzeigt;
wobei jedes der mehreren Nicht-Legacy-Headerfelder ein weiteres Zusätzliches PPDU-Feld umfasst, das die Anwesenheit oder Abwesenheit eines folgenden Nicht-Legacy-Headerfeldes und eines Datenfeldes anzeigt;
und wobei die nominale Datenfeldlänge eine Zeit ist, die gleich oder größer ist als eine Gesamtheit des Nicht-Legacy-STF, des Nicht-Legacy CEF, der mehreren Nicht-Legacy-Headerfelder und der mehreren Datenfelder.

## Revendications

1. Appareil de communication (1000, 9000) prenant en charge une communication via un système WiGig hérité et via un système multi-gigabit directionnel amélioré EDMG, soit Enhanced Directional Multi-Gigabit, l'appareil de communication comprenant :
une unité de génération PPDU (1000a) configurée, par rapport à une unité de données de protocole de convergence à couche physique agrégée A-PPDU, soit Aggregate Physical layer convergence Protocol Data Unit, comprenant un STF hérité, un CEF hérité, un champ d'en-tête hérité, un STF non hérité, un CEF non hérité, de multiples champs d'entête non hérités et de multiples champs de données, pour régler une taille en octets de données nominale calculée sur base d'une longueur de champ de données nominale dans le champ d'en-tête hérité, et pour régler un premier champ PPDU additionnel compris dans le champ d'en-tête hérité à 0 ;
une unité de traitement de signal (1000b) configurée pour former l'A-PPDU avec une longueur inférieure ou égale à la longueur de champ de données nominale ; et
une unité de transmission (1000c) configurée pour transmettre l'A-PPDU formée,
une unité de réception (1000d) configurée pour recevoir une trame Ack en réponse à l'A-PPDU transmise, dans laquelle chaque champ des multiples champs d'en-tête non hérités indique la longueur d'un champ correspondant des multiples champs de données ;
dans lequel chaque champ des multiples champs d'entête non hérités comprend un autre champ PPDU additionnel indiquant la présence ou l'absence d'un champ d'en-tête non hérité subséquent et un champ de données ; et
dans lequel la longueur de champ de données nominale est un temps supérieur ou égal au total du STF non hérité, du CEF non hérité, des multiples champs d'en-tête non hérités et des multiples champs de données.

2. Appareil de communication (2000, 9100) prenant en charge une communication via un système WiGig hérité et via un système multi-gigabit directionnel amélioré EDMG, l'appareil de communication comprenant :
une unité de réception (1000d) configurée, par rapport à une unité de données de protocole de convergence à couche physique agrégée, A-PPDU, comprenant un STF hérité, un CEF hérité, un champ d'en-tête hérité, un STF non hérité, un CEF non hérité, de multiples champs d'en-tête non hérités et de multiples champs de données, pour recevoir l'A-PPDU formée avec une longueur inférieure ou égale à la longueur nominale du champ de données, où la taille en octets de données nominale calculée sur base de la longueur de champ de données nominale est réglée dans le champ de données hérité et un premier champ PPDU additionnel inclus dans le champ d'en-tête hérité est réglé à 0 ; et
une unité de transmission (1000c) configurée pour transmettre une trame Ack en réponse à l'A-PPDU reçue, dans laquelle chaque champ des multiples champs d'en-tête non hérités indique la longueur d'un champ correspondant des multiples champs de données ;
dans lequel chaque champ des multiples champs d'entête non hérités comprend un autre champ PPDU additionnel indiquant la présence ou l'absence d'un champ d'en-tête non hérité subséquent et un champ de données ; et
dans lequel la longueur de champ de données nominale est un temps supérieur ou égal au total du STF non hérité, du CEF non hérité, des multiples champs d'en-tête non hérités et des multiples champs de données.

3. Procédé de communication mis en œuvre par un appareil de communication (1000, 9000) prenant en charge une communication via un système WiGig hérité et via un système multi-gigabit directionnel amélioré EDMG, le procédé comprenant :
le réglage, par rapport à une unité de données de protocole de convergence à couche physique agrégée, A-PPDU, comprenant un STF hérité, un CEF hérité, un champ d'en-tête hérité, un STF non hérité, un CEF non hérité, de multiples champs d'en-tête non hérités et de multiples champs de données, d'une taille en octets de données nominale calculée sur base d'une longueur de champ de données nominale dans le champ d'en-tête hérité en réglant un premier champ PPDU additionnel inclus dans le champ d'entête hérité à 0 ;
la formation de l'A-PPDU avec une longueur inférieure ou égale à la longueur de champ de données nominale ; et
la transmission de l'A-PPDU formée,
la réception d'une trame Ack en réponse à l'A-PPDU transmise, dans laquelle chaque champ des multiples champs d'en-tête non hérités indique la longueur d'un champ correspondant des multiples champs de données ;
dans lequel chaque champ des multiples champs d'entête non hérités comprend un autre champ PPDU additionnel indiquant la présence ou l'absence d'un champ d'en-tête non hérité subséquent et un champ de données ; et
dans lequel la longueur de champ de données nominale est un temps supérieur ou égal au total du STF non hérité, du CEF non hérité, des multiples champs d'en-tête non hérités et des multiples champs de données.

4. Procédé de communication mis en œuvre par un appareil de communication (2000, 9100) prenant en charge une communication via un système WiGig hérité et via un système multi-gigabit directionnel amélioré EDMG, le procédé comprenant :
la réception, par rapport à une unité de données de protocole de convergence à couche physique agrégée, A-PPDU, comprenant un STF hérité, un CEF hérité, un champ d'en-tête hérité, un STF non hérité, un CEF non hérité, de multiples champs d'en-tête non hérités et de multiples champs de données, de l'A-PPDU formée avec une longueur inférieure ou égale à la longueur de champ de données nominale, où la taille en octets de données nominale calculée sur base de la longueur de champ de données nominale est réglée dans le champ de données hérité et un premier champ PPDU additionnel inclus dans le champ d'en-tête hérité est réglé à 0 ; et
la transmission d'une trame Ack en réponse à l'A-PPDU reçue, dans laquelle chaque champ des multiples champs d'en-tête non hérités indique la longueur d'un champ correspondant des multiples champs de données ;
dans lequel chaque champ des multiples champs d'entête non hérités comprend un autre champ PPDU additionnel indiquant la présence ou l'absence d'un champ d'en-tête non hérité subséquent et un champ de données ; et
dans lequel la longueur de champ de données nominale est un temps supérieur ou égal au total du STF non hérité, du CEF non hérité, des multiples champs d'en-tête non hérités et des multiples champs de données.
